(19) Europäisches Patentamt
European Patent Office
Office européen des brevets

(11) EP 2 813 376 B1

(12) **EUROPEAN PATENT SPECIFICATION**

(45) Date of publication and mention of the grant of the patent:
**03.04.2019 Bulletin 2019/14**

(21) Application number: **13746733.8**

(22) Date of filing: **06.02.2013**

(51) Int Cl.:
***B60C 9/00*** *(2006.01)* ***B60C 9/20*** *(2006.01)*
***B60C 9/22*** *(2006.01)* ***B60C 17/00*** *(2006.01)*
***D02G 3/48*** *(2006.01)*

(86) International application number:
**PCT/JP2013/052773**

(87) International publication number:
**WO 2013/118785 (15.08.2013 Gazette 2013/33)**

(54) **PNEUMATIC RADIAL TIRE**

RADIALLUFTREIFEN

PNEUMATIQUE RADIAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2012 JP 2012023266**

(43) Date of publication of application:
**17.12.2014 Bulletin 2014/51**

(73) Proprietor: **Bridgestone Corporation**
**Tokyo 104-8340 (JP)**

(72) Inventor: **YOSHIMI Takuya**
**Kodaira-shi**
**Tokyo 187-0031 (JP)**

(74) Representative: **Oxley, Robin John George**
**Marks & Clerk LLP**
**90 Long Acre**
**London WC2E 9RA (GB)**

(56) References cited:
**EP-A1- 0 756 949**
**EP-A2- 1 491 365**
**JP-A- H0 578 915**
**JP-A- H11 208 212**
**JP-A- 2004 224 074**
**JP-A- 2006 503 987**
**JP-A- 2009 102 019**
**JP-A- 2009 137 449**
**JP-A- 2010 137 601**
**JP-A- 2010 179 684**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 813 376 B1

**Description**

TECHNICAL FIELD

The present invention relates to a pneumatic radial tire (hereinafter, also simply referred to as a "tire"), and more specifically, a pneumatic radial tire in which run-flat durability can be improved while inhibiting vibration during tire rolling and tire protrusion during high-speed traveling.

BACKGROUND ART

Conventionally, in a pneumatic radial tire excepting a run-flat tire, 6,6-nylon is widely used as a member of a belt reinforcing layer. It is generally known that, by using a material of polyethylene telephthalate (PET) or polyethylene naphthalate (PEN) as a member of a belt reinforcing layer, vibration generated during tire rolling can be inhibited and tire protrusion during high-speed traveling is also inhibited to improve the high-speed durability, which is advantageous (for example, Patent Document 1 and 2).

On the other hand, recently, market for a run-flat tire which can travel safely to some extent even in a punctured state and can avoid danger is expanding. By combining a side reinforcing rubber and a high rigidity belt reinforcing layer, a run-flat tire can basically balance performances.

However, when a polyester fiber which has considerably poor heat resistant adhesive property with rubber compared with 6,6-nylon is used as a belt reinforcing layer, a ground contact pressure of both side portions (shoulder portions) of a steel belt layer of a run-flat tire during punctured traveling (inner pressure = zero) becomes locally large, and heat generation at the both sides of a belt is accelerated, whereby separation between fiber and rubber of the belt reinforcing layer occurs before breakage of the side reinforcing rubber, losing a function as a run-flat tire.

RELATED ART DOCUMENTS

PATENT DOCUMENTS

Patent Document 1: Japanese Unexamined Patent Application Publication No. 2007-145123
Patent Document 2: Japanese Unexamined Patent Application Publication No. 2002-079806
Reference is also made to EP 1491365.

SUMMARY OF THE INVENTION

PROBLEMS TO BE SOLVED BY THE INVENTION

Aramid or the like which is widely used for a belt reinforcing layer has a higher rigidity than that of PET or PEN, and has a more favorable heat resistant adhesive property with rubber than that of polyester fiber, a heat resistant adhesive property close to that of 6,6-nylon. Therefore, it is thought that aramid fiber and polyester fiber are hybridized to improve the adhesive property between rubber and an organic fiber cord. However, the hybrid cord has a problem in that adhesion can not be ensured between aramid fiber and polyester fiber, and is not yet used as a multipurpose member since the cost of aramid fiber as a material is high.

Accordingly, an object of the present invention is to resolve the above-mentioned problems and to provide a pneumatic radial tire in which run-flat durability can be improved while inhibiting vibration during tire rolling and tire protrusion during high-speed traveling.

MEANS FOR SOLVING THE PROBLEMS

The present inventor intensively studied to resolve the above-mentioned problems to find that, by using a polyester cord having predetermined physical properties as a reinforcing material of a belt reinforcing layer and ensuring adhesive strength between the polyester cord and rubber, the run-flat durability can be improved while inhibiting vibration during tire rolling and tire protrusion during high-speed traveling, thereby completing the present invention.

Specifically, the pneumatic radial tire of the present invention is a pneumatic radial tire comprising a side reinforcing rubber layer having a crescent shaped cross-section arranged on the inside of a carcass at a side wall portion, and a belt reinforcing layer which is formed by spirally winding a narrow width strip which is formed by covering at least one polyester cord with rubber with an angle of 0° to 5° with respect to the tire circumferential direction, wherein

the polyester cord is pre-treated using an epoxy compound prior to an adhesive agent treatment and the adhesion level of the polyester cord in a residual adhesion evaluation method after an adhesive agent treatment is 5 N/cord or higher, the polyester cord taken out from pneumatic radial tire satisfies that the ply twist coefficient $\alpha1$ and the cable twist coefficient $\alpha2$ represented by the following formulae:

$$\alpha1 = N1 \times (0.125 \times D1/\rho)^{0.5} \times 10^{-3} \quad (1)$$

$$\alpha2 = N2 \times (0.125 \times D2/\rho)^{0.5} \times 10^{-3} \quad (2)$$

(N1 is the ply twists (/10 cm), D1 is the fineness (dtex) per one ply twist thread, N2 is the cable twists (/10 cm), D2 is the total fineness (dtex) of the cord, and $\rho$ is the density (g/cm$^3$) of the polyester cord) are 0.1 to 0.4 and 0.1 to 0.45, respectively,
wherein the ply twists of the polyester cord is 10 to 40 times/10 cm,
wherein the cable twists of the polyester cord is 10 to 40 times/10 cm, and
the initial tensile resistance degree is 7 to 20 GPa.

The residual adhesion evaluation method of a polyester cord after adhesive agent treatment will now be described. Fig. 4 is a perspective view illustrating a rubber test piece 100 used for a residual adhesion evaluation method. As illustrated, an organic fiber cord (in the figure, tire reinforcing polyester cord) 101 is embedded in rubber matrix such that cord layers are parallel to each other, and a rubber test piece 100 having a width W: 50 mm, a length L: 500 mm and a height H: 5.5 mm is manufactured. The end count of cords is set to 50 /50 mm; the distance $h_1$ between cords is set to 2.5 mm, and the distance $h_2$ from the center of the cord to the surface is set to 1.5 mm. Next, as illustrated in Fig. 5, each obtained rubber test piece 100 is hung on a pulley 102, a load of 50 kg/inch is applied in the direction of the axis of the cord, and tension and compressive force are cyclically applied at 100 rpm for 300,000 times. The tension rate at the time of adhesion test is set to 300 mm/min. After the test, the pull-up adhesive strength (N/cord) of the cord on the pulling side is measured to obtain an adhesion level by the residual adhesion evaluation method. In the present invention, the initial tensile resistance degree means the value calculated by the test method defined in JIS L 1017.

In the present invention, preferably, the total fineness of the polyester cord is 2000 to 4000 dtex. Further, in the present invention, the ply twists of the polyester cord is 10 to 40 times/10 cm. Still further, in the present invention, the cable twists of the polyester cord is 10 to 40 times/10 cm. In the present invention, preferably, the end count Ec (/5 cm) of the polyester cord per unit width at a middle region which is 70% of the steel belt layer in the maximum width centering on the equator of the belt reinforcing layer is smaller than the average end count Es (/5 cm) of both end regions which are on the outside of the middle region of the belt reinforcing layer in the tire width direction, and preferably, when $Ec \geq 35$, the relationships represented by:

$$40 \leq Es \leq 150$$

$$2.0 \geq Es/Ec \geq 1.0$$

are satisfied, and
when $Ec < 35$, the relationship represented by:

$$40 \leq Es \leq 150$$

$$4.0 \geq Es/Ec \geq 1.4$$

is satisfied. In the present invention, adhesive agent treatment is preferably performed by using: an adhesive agent composition containing (A) a thermoplastic high molecular weight polymer composed of an ethylene addition polymer containing a 2-oxazoline group or a (blocked)isocyanate group, or, a urethane-based high molecular weight polymer containing a hydrazino group, (B) a water-soluble polymer composed of a copolymer containing a maleic anhydride unit and an isobutylene unit or derivatives thereof, (C) a reaction product of diphenylmethane diisocyanate and a thermally dissociating blocking agent for isocyanate groups, a condensate of resorcin and formaldehyde obtained by a novolac

forming reaction, a condensate of chlorophenol, resorcin, and formaldehyde, a compound composed of an epoxycresol novolac resin, or, an aqueous urethane compound obtained by reacting organic polyisocyanates having a structure in which aromatics are bonded by methylene, a compound having a plurality of active hydrogen atoms, and a thermally dissociating blocking agent for isocyanate groups, and (D) an aliphatic epoxide compound; or an adhesive agent composition containing resorcin, formaldehyde, rubber latex, an emulsion-polymerized blocked isocyanate compound, and ammonia, wherein the content of the emulsion-polymerized blocked isocyanate compound is 15 to 45 % by mass. Further, in the present invention, the polyester cord is pretreated using an epoxy compound prior to the adhesive agent treatment.

## EFFECTS OF THE INVENTION

According to the present invention, a pneumatic radial tire in which run-flat durability can be improved while inhibiting vibration during tire rolling and tire protrusion during high-speed traveling can be provided.

## BRIEF DESCRIPTION OF THE DRAWINGS

Fig. 1 is a right-half cross-sectional view of one preferred example of a pneumatic radial tire of the present invention.
Fig. 2A is a schematic view of the case in which a belt reinforcing layer covers whole steel belt layer, and Fig. 2B is a schematic view of the case in which a belt reinforcing layer covers only a part of a steel belt layer.
Fig. 3 is a flowchart illustrating a method of manufacturing a tire reinforcing cord in Examples.
Fig. 4 is a cross-sectional view of a rubber test piece which is used in a residual adhesion evaluation method.
Fig. 5 is a schematic diagram of a residual adhesion evaluation method.

## MODE FOR CARRYING OUT THE INVENTION

The present invention will be described in detail with reference to the Drawings.

Fig. 1 is a right-half cross-sectional view of one preferred example of a pneumatic radial tire 10 of the present invention, comprising a pair of left-and-right bead portions 1 and a pair of side wall portions 2, and a tread portion 3 continuing to both side wall portions 2, and further comprising a carcass 4 toroidally extending between a pair of bead portions 1 to reinforce these portions 1, 2, and 3, and a pair of side reinforcing rubber layers 5 each having a crescent shaped cross-section arranged at the side wall portion 2 inside a carcass 4.

On the outside of the tread portion of the carcass 4 in the tire radius direction, one or more (in the illustrated example, two) steel belt layers 8 each formed by rubberizing a steel cord are arranged. Further, at least one (in the illustrated example, on the outside in the tire radius direction) of on the inside or on the outside of the steel belt layer 8 in the tire radius direction, a belt reinforcing layer 9 is arranged. Fig. 2 is a schematic diagram illustrating arrangement of the belt reinforcing layer 9 of a tire 10 of the present invention. As illustrated in Fig. 2A, the belt reinforcing layer 9 may be arranged to cover whole steel belt layer 8, and as illustrated in Fig. 2B, a pair of belt reinforcing layers 9 may be arranged to cover only both ends of the steel belt layer 8. In Fig. 1, the belt reinforcing layer 9 is arranged to cover whole steel belt layer 8. Two steel belt layers 8 are laminated such that cords constituting the belt layer 8 are crossed each other sandwiching the equatorial plane, to thereby constitute a belt. The belt reinforcing layer 9 is, for example, formed by spirally winding a narrow width strip which is formed by covering at least one polyester cord with rubber such that the polyester cord has an angle of 0° to 5° with respect to the tire circumferential direction.

The carcass 4 in Fig. 1 is constituted by one carcass ply formed by covering a plurality of organic fiber cords which are arranged in parallel with coating rubber. The carcass 4 is composed of a body portion which is toroidally extending between a pair of bead cores 6 each embedded in the bead portion 1, and a turn-up portion rolled up from the inside to the outside in the tire width direction and outward in the tire radial direction around each of the bead cores 6. However, the number of plies and the structure of the carcass 4 of the tire 10 of the present invention is not limited thereto. Further, although the illustrated belt is composed of two steel belt layers 8, the number of the steel belt layers 8 constituting the belt of the tire 10 of the present invention is not limited thereto.

In present invention, a polyester cord taken out from a tire satisfies that the ply twist coefficient $\alpha 1$ and the cable twist coefficient $\alpha 2$ represented by the following formulae:

$$\alpha 1 = N1 \times (0.125 \times D1/\rho)^{0.5} \times 10^{-3} \quad (1)$$

$$\alpha 2 = N2 \times (0.125 \times D2/\rho)^{0.5} \times 10^{-3} \qquad (2)$$

(N1 is the ply twists (/10 cm), D1 is the fineness (dtex) per one ply twist thread, N2 is the cable twists (/10 cm), D2 is the total fineness (dtex) of the cord, and $\rho$ is the density (g/cm$^3$) of the polyester cord) are 0.1 to 0.4 and 0.1 to 0.45, respectively. When values of $\alpha 1$ and $\alpha 2$ satisfy the above-mentioned range, the strength and fatigue resistance of the cord can be highly balanced. Preferably, $\alpha 1$ is 0.2 to 0.3, and $\alpha 2$ is 0.25 to 0.4.

In the present invention, it is important that the initial tensile resistance degree of a polyester cord constituting the belt reinforcing layer 9 taken out from the tire 10 is 7 to 20 GPa. When the polyester cord satisfies such physical properties, vibration generated during tire rolling can be inhibited, and tire protrusion during high-speed traveling can be inhibited, thereby improving high-speed durability. When the initial tensile resistance degree of a polyester cord constituting the belt reinforcing layer 9 taken out from the tire 10 is lower than 7 GPa, vibration during tire rolling can not be inhibited; on the other hand, when the initial tensile resistance degree is to be set higher than 20 GPa, the number of twists of the polyester cord needs to be extremely small, which deteriorates cord fatigability and compromises tire durability. Preferably, the initial tensile resistance degree is 10 to 17 GPa.

Further, in the present invention, it is also important that the adhesion level of the polyester cord constituting the belt reinforcing layer 9 in a residual adhesion evaluation method after an adhesive agent treatment is 5 N/cord or higher. When the adhesion level is lower than 5 N/cord, adhesion failure is caused at an early stage during run-flat traveling, by which a run-flat tire is not attained. The upper limit of the adhesion level is not particularly restricted, and the higher the adhesion level is, the more preferable. However, it is difficult to realize a high adhesion level in view of adhesion techniques. In the present invention, when the adhesion level is similar to that of 6,6-nylon, an excellent run-flat durability can be obtained. Preferably, the adhesion level is 8 N/cord or higher.

First, a polyester cord to be used in the present invention will be described.

Examples of the polyester cord which can be used in the present invention include a polyester cord obtained by subjecting a multipurpose PET cord or PEN cord or the like as a tire cord to an adhesive agent treatment using the below-mentioned water-soluble adhesive containing an epoxy resin, or using a water-soluble adhesive containing resorcin, formaldehyde, and latex (RFL). By this, the adhesion level in the residual adhesion evaluation method of a polyester cord can be favorably improved. Preferably, the polyester cord is a polyester cord composed of a specific polyester filament in which a specific epoxy-based surface treatment agent is attached to the below-mentioned fiber surface. By employing such constitution, a polyester cord in which the adhesive property with rubber which is conventionally hard to be ensured is improved can be favorably obtained. In particular, the adhesive property between rubber/polyester cord at the time of high heat generation when a high-intensity dynamic strain is repeatedly applied can be dramatically improved.

The above-mentioned suitable polyester cord can be manufactured by a fiber made of polyester in which the primary repeating unit is ethylene terephthalate and whose intrinsic viscosity is 0.85 or higher. A polyester fiber in which the amount of terminal carboxy group in the fiber is 20 equivalent/ton or larger, the long period according to small-angle X-ray diffraction is 9 to 12 nm, and a surface treatment agent having an epoxy group is attached to the surface of the fiber is used.

The intrinsic viscosity of the above-mentioned polyester fiber is 0.85 or higher, and is preferably 1.10 or lower. Preferably, a polyester fiber whose intrinsic viscosity is in the range of 0.90 to 1.00 is used. When the intrinsic viscosity is lower than 0.85, the strength of the polyester fiber is insufficient; in particular, decrease in strength in a tire vulcanizing step may not be sufficiently suppressed, which is not preferred.

In the above-mentioned polyester fiber, it is preferred that the amount of terminal carboxy group of the total polymer is 20 equivalent/ton or higher and that, to the fiber surface, a surface treatment agent having an epoxy group is attached. Conventionally, in a polyester fiber used for reinforcing a tire, for the purpose of improving the heat deterioration resistance or the like, a method in which the carboxy group of the polymer is maintained at 15 equivalent/ton or smaller has been generally used. Since a polyester fiber for reinforcing a tire, however, needs to maintain the adhesive property to rubber in addition to maintain the strength of the adhesive property, in cases where the long period according to small-angle X-ray diffraction is as small as 9 to 12 nm, and the surface thereof has been subjected to an epoxy treatment, such as in the case of a polyester fiber which can be preferably used for a tire of the present invention, the amount of carboxy group of 20 equivalent/ton or larger is optimal for reinforcing a tire. The upper limit of the amount of carboxy group in the polymer is preferably 40 equivalent/ton or smaller, and more preferably, in a range of 21 to 25 equivalent/ton.

Here, as a surface treatment agent having an epoxy group which is to be attached to the surface of the above-mentioned polyester fiber, those containing an epoxy compound which is a mixture of one, or two or more types of epoxy compounds having two or more epoxy groups in one molecule are suitable. More specifically, halogen-containing epoxy compounds are preferred, and examples thereof include those obtained by synthesis with epichlorohydrin polyhydric

alcohol or polyvalent phenol. A compound such as glycerolpolyglycidylether is preferred. The amount of a surface treatment agent containing such an epoxy compound attached to the fiber surface is preferably in the range of 0.05 to 1.5 % by mass, preferably, 0.10 to 1.0 % by mass. Into the surface treatment agent, a smoothing agent, an emulsifier, an antistatic agent or other additives, or the like may be mixed as needed.

Further, in the above-mentioned polyester fiber, the long period according to small-angle X-ray diffraction needs to be 9 to 12 nm. The term "long period according to small-angle X-ray diffraction" herein refers to the interval between crystals in the polyester polymer in the fiber vertical axis direction. The long period in a polyester fiber which can be preferably used for a tire of the present invention is characterized in that the period is short and the number of tie molecules connecting crystals is large. As the result, the strength maintaining rate when the polyester fiber is used for a tire reinforcing fiber can be maintained high. By making the long period in the above-mentioned range, the physical properties of the fiber can be made appropriate for a tire reinforcing fiber having high modulus and low degree of shrinkage. Usually, for the range of the long period, 9 nm is the lower limit. Preferably, the long period according to small-angle X-ray diffraction of the above-mentioned polyester fiber is in a range of 10 to 11 nm.

In the present invention, the amount of terminal carboxy group on the surface (original yarn surface) of the polyester fiber which can be preferably used for a tire of the present invention is preferably 10 equivalent/ton or smaller. The amount of carboxy group of whole polymer in the polyester fiber which can be preferably used for a tire of the present invention is, as mentioned above, preferably 20 equivalent/ton or higher; the amount of carboxy groups on the fiber surface is preferably 10 equivalent/ton or smaller, which is smaller than that of the whole polymer due to the reaction with an epoxy compound attached to the fiber surface. As mentioned above, by the reaction of carboxy groups in the polymer with an epoxy group on the fiber surface, a polyester resin of the present invention has a very excellent adhesion performance. At the same time, when a large amount of terminal carboxy groups on the fiber surface are left, the heat resistance and adhesive property tend to deteriorate.

In the above-mentioned polyester fiber, the crystal size in the fiber lateral axis direction is preferably in the range of 35 to 80 $nm^2$. Although the polyester fiber of the present invention has a long period which is the interval of crystals in the fiber vertical axis of as short as 12 nm or shorter, since the size of the crystal needs to be large for obtaining a high strength fiber, in the present invention, the crystal size of the fiber in the lateral axis direction preferably grows to 35 $nm^2$ or larger. It is noted that since the fiber becomes rigid and the fatigue performance deteriorates when the crystal size is too large, the crystal size is preferably 80 $nm^2$ or smaller. The crystal size in the fiber lateral axis direction is more preferably in the range of 40 to 70 $nm^2$. As mentioned above, by the development of crystal of the fiber in the lateral axis direction, tie molecule is likely to develop also in the fiber lateral axis direction, and a three-dimensional structure is built in the longitudinal and lateral direction of the fiber, thereby obtaining a fiber which is particularly suitable for reinforcing a tire. Further, since the fiber has such a three-dimensional structure, the loss coefficient of the fiber tan$\delta$ becomes low. As the result, the amount of heat under a cyclic stress can be suppressed, and it becomes possible to keep the adhesion performance after providing a cyclic stress, thereby obtaining a fiber which is particularly preferred for reinforcing a tire.

Further, in the above-mentioned polyester fiber, the amount of terminal methyl groups in the fiber is preferably 2 equivalent/ton or smaller; more preferably, terminal methyl groups are not contained in the fiber. This is because, since the methyl groups in polyester polymer has low reactivity and do not react with an epoxy group at all, a reaction between a carboxy group and an epoxy group which is effective for the improvement of the adhesive property is likely to be inhibited. When there are no terminal methyl groups or a small amount of terminal methyl groups in the polymer constituting the fiber, a high reactivity with an epoxy group in a surface treatment agent is ensured, and a high adhesive property and surface protecting ability can be ensured.

Still further, in the above-mentioned polyester fiber, the titanium oxide content in the fiber is preferably 0.05 to 3.0 % by mass. When the titanium oxide content is smaller than 0.05 % by mass, the smoothing effect for distributing a stress applied between a roller and the fiber in a drawing step or the like is likely to be insufficient, and may be disadvantageous for making the strength of the finally obtained fiber high. On the other hand, when the content of titanium oxide is larger than 3.0 % by mass, titanium oxide functions as a foreign matter inside the polymer to inhibit the drawing property, and the strength of finally obtained fiber is likely to decrease.

Still further, in the above-mentioned polyester fiber, the epoxy index of the surface of the fiber is preferably 1.0 $\times 10^{-3}$ equivalent/kg or smaller. Specifically, the epoxy index per 1 kg of polyester fiber is preferably 0.01 $\times 10^{-3}$ to 0.5 $\times 10^{-3}$ equivalent/kg. When the epoxy index of the fiber surface is high, there tend to be a large amount of unreacted epoxy compound. For example, a large amount of viscous scum on guides or the like in a twisting step is generated, and the passability of a fiber in a process decreases, and at the same time, a problem which causes decrease in the product quality such as twist unevenness occurs.

The strength of the above-mentioned polyester fiber is preferably in a range of 4.0 to 10.0 cN/dtex. Both when the strength is too low and when the strength is too high, the durability in rubber tends to deteriorate. For example, when the production of the fiber is performed at the highest strength, breaking of a thread in a spinning step tends to occur, which is likely to be detrimental to the quality stability in an industrial fiber. The dry heat shrinkage of the fiber at a

temperature of 180°C is preferably in a range of 1 to 15%. When the dry heat shrinkage is too high, the change in the size during processing tends to be large, and the dimensional stability of a molding for which the fiber is used tends to become poor.

Next, a suitable water-soluble adhesive containing an epoxy resin will be described.

Examples of the adhesive agent composition which is used for a water-soluble adhesive containing an epoxy resin include those containing (A) a thermoplastic high molecular weight polymer composed of an ethylene addition polymer containing a 2-oxazoline group or a (blocked)isocyanate group, or, a urethane-based high molecular weight polymer containing a hydrazino group, (B) a water-soluble polymer composed of a copolymer containing a maleic anhydride unit and an isobutylene unit or derivatives thereof, (C) a reaction product of diphenylmethane diisocyanate and a thermally dissociating blocking agent for isocyanate groups, a condensate of resorcin and formaldehyde obtained by a novolac forming reaction, a condensate of chlorophenol, resorcin, and formaldehyde, a compound composed of an epoxycresol novolac resin, or, an aqueous urethane compound obtained by reacting organic polyisocyanates having a structure in which aromatics are bonded by methylene, a compound having a plurality of active hydrogen atoms, and a thermally dissociating blocking agent for isocyanate groups, and (D) an aliphatic epoxide compound.

(A) The thermoplastic high molecular weight polymer is an ethylene addition polymer whose principal chain is an acrylic polymer, a vinyl acetate polymer, a vinyl acetate ethylene polymer, or the like, or a urethane-based high molecular weight polymer composed mostly of a linear chain structure. When the principal chain of the thermoplastic high molecular weight polymer is composed of an ethylene addition polymer, it is preferred that the ethylene addition polymer is substantially composed of a monomer having one carbon-carbon double-bond, and that a carbon-carbon double-bond having a hydrogen group at a sulfur-reactive allylic position introduced by a conjugated diene monomer or the like is 10% or lower by the monomer composition ratio. Examples of a cross-linkable functional group as a pendant group of the thermoplastic high molecular weight polymer include an oxazoline group, and a (blocked)isocyanate group. The thermoplastic high molecular weight polymer is preferably a high molecular weight polymer which is composed mostly of a linear chain structure and having a relatively high molecular weight region, and particularly preferably, the weight-average molecular weight based on polystyrene is 10,000 or higher. Further, the thermoplastic high molecular weight polymer is preferably a molecular having a relatively low to intermediate molecular weight region, and particularly preferably, a molecular having a molecular weight of 9,000 or lower. Still further, the thermoplastic high molecular weight polymer is preferably composed of an ethylene addition polymer containing a 2-oxazoline group as a pendant group. Still further, the thermoplastic high molecular weight polymer is preferably a polyurethane-based polymer whose principal chain is composed mostly of a linear chain structure and which contains a hydrazino group as a pendant group.

The above-mentioned thermoplastic high molecular weight polymer is a thermoplastic resin to be contained in an adhesive agent composition for the purposed of increasing the flexibility of the adhesive agent composition matrix which tends to become hard by containing an aliphatic epoxide compound and a water-soluble polymer or an aqueous urethane compound. In the case of rubber articles containing sulfur, since, if the principal chain skeleton of the thermoplastic high molecular weight polymer has sulfur-reactivity, the heat deterioration of the adhesion accompanied by sulfur crosslinking becomes large, in the present invention, the thermoplastic high molecular weight polymer substantially does not have a carbon-carbon double-bond having a hydrogen atom at an allylic position. When the thermoplastic high molecular weight polymer contains a cross-linkable functional group which bonds as a pendant group in a principal chain skeleton, in particular, an active hydrogen on the synthetic resin surface or a cross-linkable group on a carbonyl group in an appropriate amount, a bond between a coat layer of an adhesive agent composition and the synthetic resin surface is obtained, and at the same time, molecular flow at high temperature is inhibited by intramolecular cross-linking and the adhesive strength at high temperature is improved, which is preferred. An excess amount of cross-linking group is not preferred since the chemical heat resistance is reduced. The amount of cross-linkable functional group contained in the thermoplastic high molecular weight polymer depends on the molecular weight of the principal chain skeleton of the thermoplastic high molecular weight polymer, the type of a cross-linkable functional group as a pendant group or the molecular weight. Usually, the amount of such a cross-linkable functional group is preferably in a range of 0.01 mmol/g to 6.0 mmol/g with respect to the total dry weight of the thermoplastic high molecular weight polymer.

As mentioned above, the above-mentioned thermoplastic high molecular weight polymer has, as a main skeleton, a thermoplastic organic polymer which is widely used for a variety of applications as an adhesive agent, a gluing agent, a paint, a binder, a resin modifying agent, a coating agent, or the like, and substantially does not contain in the principal chain structure a carbon-carbon double-bond having a hydrogen atom at an allylic position which is a reaction point of a cross-linking agent such as sulfur, and has a cross-linkable functional group as a pendant group. Although the thermoplastic high molecular weight polymer may have a carbon-carbon double-bond when the polymer has a structure such as a side chain other than a principal chain, the double-bond is preferably a carbon-carbon double-bond having a low reactivity with sulfur, for example, a carbon-carbon double-bond or the like of an aromatic which is stable

due to its resonance structure. In particular, industrially, as the thermoplastic high molecular weight polymer, an ethylene addition polymer such as an acrylic polymer, a vinyl acetate polymer, and a vinyl acetate ethylene polymer can be preferably used. Also a thermoplastic organic polymer such as a urethane-based high molecular weight polymer having a relatively high molecular weight region composed mostly of a linear chain structure can be preferably used since the cohesive failure resistance by a urethane bond having a large cohesive energy present in the molecule or by an intermolecular secondary bond due to the urethane bond is high and the durability becomes favorable.

In the following, descriptions will be made for two cases: (i) where the principal chain of thermoplastic high molecular weight polymer is an ethylene addition polymer, and, (ii) where the principal chain of the thermoplastic high molecular weight polymer is a urethane-based high molecular weight polymer.

(i) When the principal chain of the thermoplastic high molecular weight polymer is composed of an ethylene addition polymer, the polymer is composed of a unit derived from an ethylenic unsaturated monomer having one carbon-carbon double-bond and a monomer containing two or more carbon-carbon double-bonds, and preferably, the amount of a carbon-carbon double-bond having an addition reactivity is 10 mol% or smaller by the monomer composition ratio based on the total amount of monomer to be added, and preferably 0 mol%.

When the polymer is a thermoplastic high molecular weight polymer whose principal chain is composed of an ethylene addition polymer, example of the monomer constituting the principal chain skeleton which is an ethylenic unsaturated monomer having one carbon-carbon double-bond include: an $\alpha$-olefins such as ethylene, propylene, butylene, and isobutylene; $\alpha,\beta$-unsaturated aromatic monomers such as styrene, $\alpha$-methyl styrene, monochlorostyrene, vinyltoluene, vinylnaphthalene, styrene, and sodium sulfonate; ethylenic carboxylic acids such as an itaconic acid, a fumaric acid, a maleic acid, an acrylic acid, a methacrylic acid, and a butene tricarboxylic acid, and salts thereof; acid anhydrides such as maleic anhydride, and itaconic acid anhydride; esters of an unsaturated carboxylic acid such as (meth)acrylic acid methyl, (meth)acrylic acid ethyl, (meth)acrylic acid butyl, (meth)acrylic acid 2-ethyl hexyl, (meth)acrylic acid methoxy polyethylene glycol, (meth)acrylic acid 2-hydroxyethyl, and (meth)acrylic acid 2-amino ethyl; monoesters of an ethylenic dicarboxylic acid such as itaconic acid monoethyl ester, fumaric acid monobutyl ester, and maleic acid monobutyl ester; diesters of an ethylenic dicarboxylic acid such as itaconic acid diethylester, and fumaric acid dibutyl ester; amides of an $\alpha,\beta$-ethylenic unsaturated acid such as acrylamide, maleic acid amide, N-methylol acrylamide, N-(2-hydroxyethyl)acrylamide, methacrylamide, N-methylol methacrylamide, N-(2-hydroxyethyl)methacrylamide, and maleic acid amide; hydroxyl group-containing monomers such as 2-hydroxyethyl(meth)acrylate, polyethylene glycol mono(meth)acrylate; unsaturated nitriles such as acrylonitrile, methacrylonitrile, fumaronitrile, and $\alpha$-chloroacrylnitrile; vinylethers such as methyl vinylether, and ethyl vinylether; vinylketone; vinyl amide; halogen-containing $\alpha,\beta$-unsaturated monomers such as vinyl chloride, vinylidene chloride, vinyl fluoride, and vinylidene fluoride; a vinyl compound such as vinyl acetate, valeric acid vinyl, vinyl caprylate, and vinylpyridine; addition polymerizable oxazolines such as 2-isopropenyl-2-oxazoline; heterocyclic vinyl compounds such as vinylpyrrolidone; and unsaturated bond-containing silane compounds such as vinylethoxy silane, and $\alpha$-methacryloxypropyl trimethoxy silane. Any of these may be used singly or two or more of these may be used in combination. It is preferred that a thermoplastic high molecular weight polymer is obtained by radical addition polymerization of these monomers.

Examples of a monomer constituting a principal chain skeleton which contains two or more carbon-carbon double-bonds include conjugated diene monomers such as a halogen-substituted butadiene of 1,3-butadiene, 2-methyl-1,3-butadiene, 2,3-dimethyl-1,3-butadiene, and chloroprene; examples of unconjugated diene monomer include unconjugated diene monomers such as vinyl norbornene, dicyclopentadiene, and 1,4-hexadiene. Any of these may be used singly or two or more of these may be used in combination.

The thermoplastic high molecular weight polymer whose principal chain is composed of an ethylene addition polymer is composed of a unit derived from an ethylenic unsaturated monomer having one carbon-carbon double-bond and a monomer containing two or more carbon-carbon double-bonds, and preferably, the amount of a carbon-carbon double-bond which is sulfur-reactive is 10 mol% or smaller by the monomer composition ratio based on the total amount of monomer to be added, and preferably 0 mol%.

The glass-transition temperature of the thermoplastic high molecular weight polymer obtained by radical addition polymerization of the above-mentioned monomer is preferably from -90°C to 180°C, more preferably from -50°C to 120°C, and still more preferably from 0°C to 100°C. This is because, when the glass-transition temperature of the thermoplastic high molecular weight polymer is lower than -90°C, the creep when the polymer is used at a high temperature becomes large; and when the glass-transition temperature is 180°C or higher, the polymer becomes too hard so that the stress relaxation which is specific to a soft thermoplastic resin becomes small, and the cord fatigability under a high strain environment such as when a tire is used becomes low.

Examples of the cross-linkable functional group which is introduced into a thermoplastic high molecular weight polymer obtained by radical addition polymerization as a pendant group include an oxazoline group, an epoxy group, an aziridine group, a carbodiimide group, a bismaleimide group, a blocked isocyanate group, a hydrazino group, and

an epithio group. The reason why the cross-linkable functional group is introduced is that the adhesive property is improved by cross-linking reaction with other adhesive agent composition components or adherend components in contact with the thermoplastic high molecular weight polymer.

The method of obtaining a thermoplastic high molecular weight polymer by introducing a cross-linkable functional group into a polymer obtained by radical addition polymerization is not particularly restricted. For example, a method of copolymerizing an addition polymerizable monomer having oxazoline, an addition polymerizable monomer having an epoxy group, an addition polymerizable monomer having maleimide, an addition polymerizable monomer having a blocked isocyanate group, an addition polymerizable monomer having an epithio group, or the like when polymerizing a polymer obtained by the above-mentioned radical addition polymerization can be employed.

The addition polymerizable monomer having oxazoline as a pendant group is represented by the formula below:

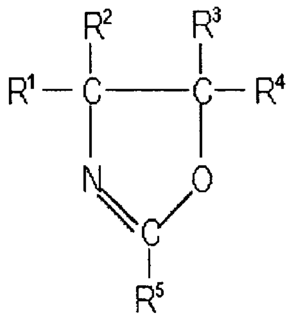

(wherein $R^1$, $R^2$, $R^3$, and $R^4$ each independently represents hydrogen, halogen, alkyl, aralkyl, phenyl or substituted phenyl, $R^5$ is a noncyclic organic group having an addition polymerizable unsaturated bond).

Examples of a monomer having oxazoline include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, and 2-isopropenyl-5-ethyl-2-oxazoline. Since, among these, 2-isopropenyl-2-oxazoline is suitable since it is easily available also industrially.

As an addition polymerizable monomer having as a pendant group a blocked isocyanate group, a compound represented by the formula below:

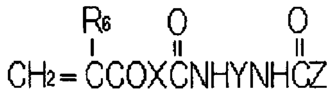

(wherein $R^6$ is a hydrogen atom or a methyl group; X is -OBO- (B is an alkylene group having 2 to 10 carbon atoms optionally substituted by a halogen atom or an alkyl group) or -NH-; Y is an isocyanate residue of aromatic diisocyanate; and Z is a hydrogen residue of ketoxime) is preferred.

The addition polymerizable monomer having as a pendant group a blocked isocyanate group is obtained by addition reaction of a polymerizable monomer having an isocyanate group such as 2-methacryloyloxyethyl isocyanate to a known blocking agent. Examples of the known blocking agent which blocks an isocyanate group include: phenols such as phenol, thiophenol, chlorophenol, cresol, resorcinol, *p-sec*-butylphenol, *p-tert*-butylphenol, *p-sec*-amylphenol, *p*-octylphenol, and *p*-nonylphenol; secondary or tertiary alcohols such as isopropyl alcohol, and tert-butyl alcohol; aromatic secondary amines such as diphenyl amine, and xylidine; phthalic imides; lactams such as $\varepsilon$-caprolactam, and $\delta$-valerolactam; caprolactams such as $\varepsilon$-caprolactam; active methylene compounds such as malonic acid dialkylester, acetylacetone, acetoacetic acid alkylester; oximes such as acetoxime, methylethylketoxime, cyclohexanoneoxime; basic nitrogen compounds such as 3-hydroxypyridine; and acidic sodium sulfite.

As the above-mentioned thermoplastic high molecular weight polymer, a thermoplastic high molecular weight polymer having a oxazoline group in which a cross-linking functional group has a favorable preservation stability in the case of long-term storage, or the like is suitably used.

The above-mentioned thermoplastic high molecular weight polymer composed of an ethylene addition polymer is preferably water-dispersible or water-soluble since water which is harmless to environment can be used as a solvent. The polymer is particularly preferably a water-dispersible resin.

(ii) When the thermoplastic high molecular weight polymer is composed of a urethane-based high molecular weight polymer, in the present invention, the main structure of the thermoplastic high molecular weight polymer is a high molecular weight polymer having a large amount of bonds caused by a reaction between an isocyanate group and an active hydrogen mainly such as urethane bonds or urea bonds obtained by polyaddition reaction of polyisocyanate and a compound having two or more active hydrogen atoms. It is obvious that examples of the polymer include a polymer

containing not only the bonds caused by the reaction between an isocyanate group and an active hydrogen but also an ester bond, an ether bond, and an amide bond contained in the molecule of the active hydrogen compound, and urethodione, carbodiimide generated by the reaction between isocyanate groups, or the like.

Examples of a cross-linking functional group to be introduced as a pendant group into a urethane-based high molecular weight polymer obtained by the above-mentioned polyaddition polymerization include a hydrazino group. The hydrazino group is preferred because the adhesive strength becomes preferable.

A thermoplastic high molecular weight polymer composed of the above-mentioned urethane-based high molecular weight polymer is preferably aqueous since water which is harmless to environment can be used as a solvent.

For the polyisocyanate to be used for the synthesis of a urethane-based high molecular weight polymer in the present invention, conventionally generally used aromatic, aliphatic or alicyclic organic polyisocyanate can be used, and examples thereof include isocyanate compounds such as toluene diisocyanate, diphenylmethane diisocyanate, 1,6-hexamethylene diisocyanate, 2,2,4(2,4,4)-trimethylhexamethylene diisocyanate, p-phenylene diisocyanate, 4,4'-dicyclohexylmethane diisocyanate, 3,3'-dimethyldiphenyl, 4,4'-diisocyanate, dianisidine isocyanate, m-xylene diisocyanate, hydrogenated xylene diisocyanate, 1,3-bis(isocyanatomethyl)cyclohexane, tetramethylxylene diisocyanate, isophorone diisocyanate, 1,5-naphthalene diisocyanate, 1,4-cyclohexyl diisocyanate, lysine isocyanate, dimethyltriphenylmethane tetraisocyanate, triphenylmethane triisocyanate, tris(isocyanate phenyl)thiophosphate, urethane modified toluene diisocyanate, allophanate modified toluene diisocyanate, biuret modified toluene diisocyanurate, isocyanurate modified toluene diisocyanate, urethane modified diphenylmethane diisocyanate, carbodiimide modified diphenylmethane diisocyanate, ureide modified diphenylmethane diisocyanate, and polymeric diphenylmethane diisocyanate, but not limited thereto. Any of these may be used singly or two or more of these may be used in combination.

Examples of a compound having two or more active hydrogen atoms to be used in the synthesis of urethane-based high molecular weight polymer in the present invention include those having, on the terminal of the molecule or in the molecule, two or more hydroxyl groups, carboxyl groups, amino groups or mercapto groups, which is generally known polyether, polyester, polyetherester, polythioether, polyacetal, polysiloxane or the like. Preferably, they are a polyether or polyester having, on the terminal of the molecule, two or more hydroxyl groups. Such compounds having two or more active hydrogen atoms preferably have a molecular weight of 50 to 5,000.

Specific examples thereof include low molecular weight polyols such as ethylene oxide or propylene oxide adducts of ethylene glycol, 1,2-propanediol, 1,3-propanediol, 1,2-butanediol, 1,3-butanediol, 1,4-butanediol, 2,3-butanediol, 2,2-dimethyl-1,3-propanediol, 1,2-pentanediol, 1,4-pentanediol, 1,5-pentanediol, 2,4-pentanediol, 3,3-dimethyl-1,2-butanediol, 2-ethyl-2-methyl-1,3-propanediol, 1,2-hexanediol, 1,5-hexanediol, 1,6-hexanediol, 2,5-hexanediol, 2-methyl-2,4-pentanediol, 1,7-heptanediol, 2-methyl-2-propyl-1,3-propanediol, 2,5-dimethyl-2,5-hexanediol, 1,2-octanediol, 1,8-octanediol, 2,2,4-trimethyl-1,3-pentanediol, propylenediol, glycerin, trimethylolpropane, 1,2,6-hexane triol, hydrogenated bisphenol A, or bisphenol A; low molecular weight polyols such as carboxy group-containing polyols such as 2,2-bis(hydroxymethyl)propionic acid, 2,2-bis(hydroxymethyl)butanoic acid, 2,5,6-trimethoxy-3,4-dihydroxyhexane acid, 2,3-dihydroxy-4,5-dimethoxypentane acid.

Examples of the high molecular weight polyols include: polyether polyols such as polypropylene glycol, polyethylene glycol, polytetramethylene glycol, ethylene oxide/propylene oxide copolymer, THF/ethylene oxide copolymer, THF/propylene oxide copolymer; polyester polyols such as a dimethylol propionic acid, polyethylene adipate, poly(propylene adipate), poly-ε-caprolactone, and copolymers thereof; polyether ester polyol, polycarbonate polyol of polycarbonic acid ester compound or the like, hydrocarbonskeleton polyol, and polyaddition product thereof, but not limited thereto. Any of these may be used singly or two or more of these may be used in combination.

At least one type of the compound having two or more active hydrogen atoms to be used for the above-mentioned polyurethane-based high molecular weight polymer preferably contains a compound containing aromatics or a structure in which aromatics are bonded by methylene. This is because, by containing a structure in which aromatics are bonded by methylene, adhesion to polyester material can be obtained. A compound containing a structure in which aromatics are connected by a bond other than methylene is also preferred because it has a similar effect.

A concrete method of synthesizing a urethane-based high molecular weight polymer having a hydrazino group as a pendant group is not particularly restricted. Specifically, for example, firstly, a urethane-based high molecular weight polymer having a terminal isocyanate obtained by reacting a compound having two or more active hydrogen atoms with an excessive amount of polyisocyanate by polyaddition reaction or the like is manufactured. After neutralizing the polymer by a neutralizer such as a tertiary amine, water is added to change the phase, then chain extension is preferably performed by a polyfunctional carboxylic acid polyhydrazide, and a treatment of hindering terminal isocyanate is preferably performed.

The reaction between the above-mentioned compound having two or more active hydrogen atoms and an excessive amount of polyisocyanate can be performed by a conventionally known single-stage or multi-stage isocyanate addition reaction method at room temperature or under a condition at a temperature of about 40 to 120°C. In the above-mentioned reaction, a known catalyst such as dibutyltin dilaurate, stannous octoate, or triethylamine, a reaction controlling agent such as a phosphoric acid, an adipic acid, or benzoyl chloride, and, an organic solvent which does not react with

an isocyanate group may be used. Examples of the above-mentioned solvent include ketones such as acetone, methyl ethyl ketone, methyl isobutyl ketone, cyclohexanone; ethers such as tetrahydrofuran, or dioxane; esters such as ethyl acetate; amide solvents such as N-methyl pyrrolidone; toluene; and xylene.

Examples of a neutralizer to be used in the above-mentioned reaction include amines such as ammonia, trimethyl amine, triethylamine, tripropyl amine, triethanol amine, monoethanol amine, N-methylmorpholine, morpholine, 2,2-dimethyl monoethanol amine, N,N-dimethyl monoethanol amine, sodium hydroxide, and potassium hydroxide. Examples of polyfunctional carboxylic acid polyhydrazide to be used in the above-mentioned reaction include oxalic acid dihydrazide, malonic acid dihydrazide, glutaric acid dihydrazide, adipic acid dihydrazide (ADH), sebacic acid dihydrazide, dodecanedionic acid dihydrazide, maleic acid dihydrazide, fumaric acid dihydrazide, itaconic acid dihydrazide, isophthalic acid dihydrazide, terephthalic acid dihydrazide, 4,4'-oxybis benzenesulfonyl hydrazide, trimesic acid trihydrazide, 1,3-bis(hydrazino carboethyl)-5-isopropylhydantoin (VDH), 7,11-octadecadiene-1,18-dicarbohydrazide, polyacrylic acid hydrazide, and acrylamide-acrylic acid hydrazidecopolymer. Among these, adipic acid dihydrazide, isophthalic acid dihydrazide, and 1,3-bis(hydrazino carboethyl)-5-isopropylhydantoin (VDH) are preferably used.

As needed, N-alkyl dialkanol amine such as diamine, poly amine, N-methyl diethanolamine; and a known chain extending agent such as dihydrazide compound may also be used.

The above mentioned high molecular weight polymers obtained by reacting polyisocyanate with a compound having two or more active hydrogen atoms by polyaddition reaction preferably have a glass-transition temperature of from -90°C to 180°C, more preferably from -50°C to 120°C, and still more preferably from 0°C to 100°C. This is because, when the glass-transition temperature of the urethane-based high molecular weight polymer is lower than -90°C, the creep when the polymer is used at a high temperature becomes large; and when the glass-transition temperature is 180°C or higher, the polymer becomes too hard so that the stress relaxation which is specific to a soft thermoplastic resin becomes small. The cord fatigability under a high strain environment such as when a tire is used becomes low, which is also not preferred.

The molecular weight of the thus obtained urethane-based thermoplastic high molecular weight polymer is Mw (weight-average molecular weight) = 10,000 or higher in terms of polystyrene by gel permeation chromatography, and more preferably 20,000 or higher. This is because, when the molecular weight is small, an improvement effect of absorbing a strain due to adhesion by an adhesive agent composition of a urethane-based high molecular weight polymer is not obtained. When a water dispersion of the obtained urethane-based high molecular weight polymer contains an organic solvent, the organic solvent can be distilled away under a reduced pressure and a heating condition as needed.

The water-soluble polymer (B) dissolves in water or an aqueous solution containing an electrolyte. The water-soluble polymer contains a carboxyl group in the molecule. The principal chain of water-soluble polymer having a carboxyl group is isobutylene-maleic anhydride copolymer or derivatives thereof. Further, the water-soluble polymer of the present invention may be a salt of the above-mentioned compound. The water-soluble polymer may be used by being dissolved in water, and may also be used by dissolving a salt obtained by neutralizing the polymer by a basic material. Specific examples of the water-soluble polymer include an isobutylene-maleic anhydride copolymer, or, a product neutralized by these basic materials.

The basic material which neutralizes the water-soluble polymer is not particularly restricted as long as it is a basic material, and examples thereof include hydroxides of an alkaline metal or an alkaline-earth metal such as sodium hydroxide, potassium hydroxide, and lithium hydroxide; ammonia; amines such as methyl amine, ethyl amine, propyl amine, dimethyl amine, triethylamine, monoethanol amine, and diethanolamine; carbonic acid salts of alkaline metal such as sodium carbonate, potassium carbonate; acetates of an alkaline metal such as acetic acid sodium, and potassium acetate; and phosphoric acid salt of alkaline metal such as phosphoric acid trisodium. Among these, sodium hydroxide, potassium hydroxide, ammonia, trimethyl amine, or triethylamine is preferably used. Particularly preferably, compared with a base containing an alkaline metal component having an effect of hydrolyzing and deteriorating a resin material such as polyester, a volatile base having a boiling point of 150°C or lower, in particular, 100°C or lower such as ammonia, trimethyl amine, triethylamine which dissipates in a heating step after a resin material is applied.

The structure of the water-soluble polymer is not particularly restricted, and may be a linear chain, branched, or two-dimensionally or three-dimensionally cross-linked. From the viewpoint of its performance, the water-soluble polymer is preferably a polymer only having a structure of a linear chain or a branched chain. The polymer preferably has a characteristic that, when the polymer is blended by an aqueous solution of an adhesive agent composition, the principal chain of the polymer does not become in the shape of a rubber ball and become stretched. When the principal chain becomes stretched in such a manner, the heat deformation resistance of an adhesive agent composition can be improved by the interaction between a carboxyl group and an adhesive agent matrix. Even if the water-soluble polymer does not become stretched in cases where the water-soluble polymer partially dissolved in water, for example, in a case of colloidal dispersion, when the polymer is partially compatible with an adhesive agent composition matrix, an effect can be obtained. The water-soluble polymer is preferably composed of a unit derived from a monomer having substantially one carbon-carbon double-bond. This is because, when the principal chain skeleton is sulfur-reactive, heat deterioration of adhesion accompanied by sulfur crosslinking becomes large, as well as, the molecular chain becomes stretched when dissolved

in water and the compatibility improves. The water-soluble polymer is preferably a high molecular weight polymer having a relatively high molecular weight region, and preferably, the weight-average molecular weight is 3,000 or higher, particularly preferably 10,000 or higher, and still more preferably 80,000 or higher.

The compound (C) is contained in the adhesive agent composition mainly for the purpose of obtaining an effect of promoting adhesion to a resin material which is one adherend of the adhesive agent composition. The reason why such a compound is contained in the adhesive agent composition is as follows. A synthetic resin material such as a polyester resin which is to be used as a base material is composed of a flat linear polymer chain, and the polymer chain has a $\pi$ electron cloud derived from an aromatic or the like contained in the polymer chain. Therefore, when a molecular structure having on the side of the molecule an aromatic $\pi$ electron in the component of the adhesive agent composition, an effect of adhesion of the adhesive agent composition to the resin surface or an effect of diffusion between polymer chains of the resin is likely to be obtained due to the $\pi$ electron interaction between the molecular structure portion and the $\pi$ electron cloud portion of the polymer chain of the resin.

The polar functional group of the compound (C) is preferably a group which reacts with an epoxy group, a (blocked)isocyanate group or the like which is a carboxyl group, or a cross-linking component contained in the adhesive agent composition. Specific examples thereof include cross-linking functional group, hydroxyl group, amino group, carboxyl group such as an epoxy group, a (blocked)isocyanate group.

The molecular structure of the compound (C) is preferably not branched, and in a linear chain shape. The molecular structure is preferably the structure of methylenediphenyl, or, the structure of polymethylene polyphenyl having a relatively linear molecular structure. The molecular weight of the molecular structure portion where aromatics are bonded by methylene is not particularly restricted, and preferably 6,000 or smaller, and more preferably 2,000 or smaller. This is because, when the molecular weight is above 6,000, the molecular weight is too high, and even when an anchor effect is substantially constant, the diffusivity to a base material becomes small. As a compound having a structure in which aromatics are bonded by methylene having a polar functional group, a molecule having a relatively low to intermediate molecular weight region and a molecular weight of 9,000 or lower is also preferred. Further, a compound having a structure in which aromatics are bonded by methylene having a polar functional group is preferably aqueous (water-soluble or water-dispersible).

Such (C) compound is reaction product formed by blocking diphenylmethanediisocyanate by a thermally dissociating blocking agent, a condensate of resorcin and formaldehyde obtained by novolac forming reaction, chlorophenol-resorcin-formaldehyde condensate, or, a cresol novolac resin having an epoxy group.

Examples of a reaction product of diphenylmethanediisocyanate and a thermally dissociating blocking agent for isocyanate groups include a reaction product in which an isocyanate group is blocked by a known blocking agent. Specifically, commercially available blocked polyisocyanate compound such as ELASTRON BN69, DELION PAS-037 can be used.

As a condensate of chlorophenol, resorcin, and formaldehyde, Specifically, as a resorcin-formaldehyde condensate obtained by novolac forming reaction, a resorcin-formaldehyde condensate obtained by a novolac forming reaction described in Examples of WO 97/13818; as a condensate of chlorophenol, resorcin, and formaldehyde, DENABOND, DENABOND-AL, and DENABOND-AF manufactured by Nagase ChemteX Corporation can be used.

As an epoxycresol novolac resin, a commercially available product such as Araldite ECN1400 manufactured by Asahi Kasei E-materials Corporation, DENACOL EM-150 manufactured by Nagase ChemteX Corporation can be used. Since the epoxy novolac resin is also an epoxide compound, it acts also as an intermolecular cross-linking component for an adhesive agent molecule which inhibits the fluidization of an adhesive agent composition at a high temperature. A compound obtained by modifying a condensate of phenols and formaldehyde by sulfomethylation is a compound obtained by heat reaction of a sulfomethylation agent before, during, or after the condensation reaction of phenols and formaldehyde. Examples of the sulfomethylation agent include salts of a sulfurous acid or a disulfurous acid and a basic material. Specifically, a sulfomethylation modified product of a condensate of phenols and formaldehyde described in Examples of Japanese Patent Application No. H10-203356 can be used.

As the compound (C), an aqueous urethane compound obtained by reacting organic polyisocyanates having a structure in which aromatics are bonded by methylene (molecular structure) (hereinafter, also referred to as "aromatic methylene bond structure"), a compound having a plurality of active hydrogen atoms, and a thermally dissociating blocking agent for isocyanate groups may be used. The aqueous urethane compound is contained mainly for the purpose of promoting the adhesion of the adhesive agent composition to a synthetic resin, and is used as not only as an adhesive property improver but as a flexible cross-linking agent, by which an effect of inhibiting the fluidization of the adhesive agent composition molecular chain at a high temperature is expected. The aqueous urethane compound is a urethane reaction product obtained by reacting an organic polyisocyanate compound having a structure in which aromatics are bonded by methylene, and preferably, the aqueous urethane compound has two or more structures in which aromatics are bonded by methylene.

The reason why it is preferred that the aqueous urethane compound contains a benzene ring or a structure in which aromatics are bonded by methylene is described below. A synthetic resin material such as polyethylene terephthalate to be used as a base material is composed of a flat linear polymer chain, and, between the polymer chains or on the surface thereof, there exists a π electron cloud derived from aromatics or the like contained in the polymer chain. Accordingly, when the aqueous urethane compound contains a molecular structure having on the side an aromatic π electron, an effect of the adhesion to the surface of a resin of a base material or an effect of dispersion between polymer chains are likely to be obtained due to π electron interaction at the molecular structure portion.

The aromatic methylene bond structure is preferably the structure of methylenediphenyl, or the structure of polymethylene polyphenyl if the structure is a relatively linear molecular structure. The molecular weight of the aromatic methylene bond structure portion is not particularly restricted, and preferably, the molecular weight is 6,000 or smaller, and more preferably 2,000 or smaller. This is because, when the molecular weight is above 6,000, which is a high molecular weight, the diffusivity to a base material becomes small even though the anchor effect is substantially constant.

In order for an isocyanate compound having in the molecule one aromatic methylene bond structure such as a blocked methylenediphenyldiisocyanate to be expected to have an anchor effect between a base material and an adhesive agent layer, cross-linking between an aqueous urethane compound which is applied to the base material and another adhesive agent composition component is required. However, an aqueous urethane compound having aromatic methylene bond structure portions at a plurality of sites in the molecule to allow itself to be bonded is preferred since it is cross-linked at a site other than an aromatic methylene bond structure portion or mechanically anchors itself to an adhesive agent composition, and an adhesion promoting effect is obtained with a relatively small loss. Naturally, an adhesion promoter of an aqueous urethane compound having one aromatic methylene bond structure in the molecules may be added to an adhesive agent composition of the present invention.

The aqueous urethane compound which is an adhesive property improver preferably has two or more thermally dissociating blocked isocyanate groups in the molecule. This is because the thermally dissociating blocked isocyanate groups react with the vicinity of the surface of a resin material such as polyethylene terephthalate to be used as a base material, other adhesive agent composition components, or active hydrogen atoms on an adherend rubber, thereby promoting the adhesive property by cross-linking. The aqueous urethane compound preferably has a group which can generate a salt or a hydrophilic group such as a hydrophilic polyether chain. This is because water which is advantageous from a hygiene viewpoint can be used as a solvent.

Examples of the blocking agent compound for a thermally dissociating blocked isocyanate group include a known blocking agent which blocks the above-mentioned isocyanate group.

Examples of a method of introducing a group which can generate a salt or a hydrophilic group such as a hydrophilic polyether chain include: as a method of introducing an anionic hydrophilic group, a method in which, after reacting polyisocyanate and polyol, a part of the terminal isocyanate group is allowed to react with salts of an organic acid having an active hydrogen atom such as sodium salts of an aminosulfonic acid such as taurine, N-methyl taurine, N-butyl taurine, and sulfanilic acid; and a method in which a tertiary nitrogen atom is introduced in advance, for example, by adding N-methyl-diethanolamine or the like in a step of reacting polyisocyanate and polyol, and then, the tertiary nitrogen atom is made into quaternary by dimethyl sulfate or the like. Examples of a method of introducing a hydrophilic group such as a hydrophilic polyether chain include a method in which, after reacting polyisocyanate and polyol, a part of the terminal isocyanate group is allowed to react with a compound having at least one active hydrogen atom and hydrophilic polyether chain such as monofunctional polyethylene glycolmonoalkyl ethers having a molecular weight of 350 to 3,000 (for example, Brox 350, 550, 750 (manufactured by BP Chemicals ltd.)). The hydrophilic polyether chain of such compounds contains an alkylene oxide unit such as ethylene oxide and/or propylene oxide by at least 80%, and preferably 100%.

The organic polyisocyanates to be used for an aqueous urethane compound contains an aromatic methylene bond structure, and examples thereof include methylenediphenylpolyisocyanate and polymethylene polyphenyl polyisocyanate. The organic polyisocyanate is preferably a polymethylene polyphenyl polyisocyanate having a molecular weight of 6,000 or lower, and more preferably, a polymethylene polyphenyl polyisocyanate having a molecular weight of 40,000 or lower.

The aqueous urethane compound preferably contains a structure in which aromatics are bonded by methylene such as an aromatic-containing organic polyisocyanate such as diphenylmethanediisocyanate or polyphenylenepolymethylenepolyisocyanate and a blocking agent. The aqueous urethane compound is preferably a molecule having a relatively low to intermediate molecular weight region, and preferably the molecular weight is 9,000 or lower, and more preferably 5,000 or lower. As a compound containing a blocking agent of aromatic polyisocyanate, a blocked isocyanate compound containing a known isocyanate blocking agent is preferred.

The aqueous urethane compound is preferably an aqueous resin having in one molecule two or more thermally dissociating blocked isocyanate groups and a hydrophilic group obtained by treating a urethane prepolymer having a free isocyanate group, the prepolymer being obtained by reacting an organic polyisocyanate compound whose number of functional groups is 3 to 5 and a compound having a molecular weight of 5,000 or lower and having two to four active hydrogen atoms with a thermally dissociating blocking agent which blocks an isocyanate group, and, a compound having at least one active hydrogen and at least one anionic, cationic or nonionic hydrophilic group.

More preferably, the aqueous urethane compound is preferably a water-dispersible or water-soluble aqueous resin based on a reaction product of: 40 to 85 % by mass of an organic polyisocyanate compound ($\alpha$) having a molecular weight of 2,000 lower and the number of functional groups of 3 to 5; 5 to 35 % by mass of a compound ($\beta$) having a molecular weight of 5,000 or lower and having two to four active hydrogen atoms; 5 to 35 % by mass of a thermally dissociating isocyanate group blocking agent ($\gamma$); 5 to 35 % by mass of a compound ($\delta$) having at least one active hydrogen atom and at least one anionic, cationic or nonionic hydrophilic group; and 0 to 50 % by mass of compound ($\varepsilon$) containing other active hydrogen atoms other than the above, wherein the total of mass percents of ($\alpha$) to ($\varepsilon$) is 100 based on the masses of ($\alpha$) to ($\varepsilon$), and the amounts of these components are selected such that a thermally dissociating blocked isocyanate group (NCO, calculated setting molecular weight = 42) is 0.5 to 11 % by mass.

Further preferably, the aqueous urethane compound is a heat reactive water-soluble polyurethane compound represented by the formula below:

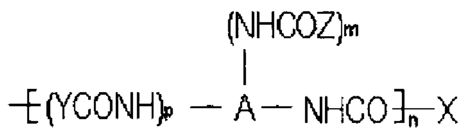

(wherein A represents an isocyanate residue of an organic polyisocyanate compound having the number of functional groups of 3 to 5; Y represents an active hydrogen residue of a blocking agent compound which detaches an isocyanate group by heat treatment; Z represents an active hydrogen residue of a compound having in the molecule at least one active hydrogen atom and at least one group which can generate a salt or a hydrophilic polyether chain; X represents an active hydrogen residue of a polyol compound having two to four hydroxyl groups and having an average molecular weight of 5,000 or smaller; n is an integer of 2 to 4; and p + m represents an integer of 2 to 4 ($m \geq 0.25$).).

Examples of a compound having the above-mentioned average molecular weight of 5,000 or lower and having two to four active hydrogen atoms include a compound selected from the group consisting of the below-mentioned (i) to (vii):

(i) polyhydric alcohols having two to four hydroxyl groups,
(ii) polyvalent amines having two to four primary and/or secondary amino group,
(iii) amino alcohols having two to four primary and/or secondary amino group and a hydroxyl group,
(iv) polyester polyols having two to four hydroxyl groups,
(v) polybutadiene polyols having two to four hydroxyl groups and copolymer of these and other vinyl monomer,
(vi) polychloroprene polyols having two to four hydroxyl groups and copolymer of these and other vinyl monomer,
(vii) polyether polyols having two to four hydroxyl groups which are C2 to C4 alkylene oxide polyaddition products of a polyvalent amine, a polyvalent phenol and amino alcohols, C2 to C4 alkylene oxide polyaddition products of C3 or higher polyhydric alcohols, a C2 to C4 alkylene oxide copolymer, or a C3 to C4 alkylene oxide polymer.

In the present invention, an active hydrogen residue of a polyol compound having two to four hydroxyl groups having an average molecular weight of 5,000 or lower can be used, and not particularly restricted as long as the compound is selected from the group consisting of the above-mentioned (i) to (vii).

Examples of the above-mentioned polyol compound having two to four hydroxyl groups and an average molecular weight of 5,000 or lower include polyols or the like as mentioned in the thermoplastic high molecular weight polymer having an average molecular weight of 5,000 or lower. When the polyol is a polyol compound containing a structure in which aromatics are bonded by methylene such as an ethylene oxide adduct of bisphenol A among the above-mentioned polyols, a structure in which aromatics are bonded by methylene can be introduced not only into a residue of an organic isocyanate of an aqueous urethane compound but also into an active hydrogen residue of polyols.

Further, examples of a blocking agent compound which detaches an isocyanate group by the above-mentioned heat treatment include a known isocyanate blocking agent.

Specific examples of a synthesis method of an aqueous urethane compound include a known method such as a method described in Japanese Examined Patent Application Publication No. S63-51474. Other than a heat reactive aqueous urethane resin synthesized according to these methods, a product such as ELASTRON BN27 manufactured by DAI-ICHI KOGYO SEIYAKU Co., Ltd. may also be used.

The (D) aliphatic epoxide compound is contained as a cross-linking agent of an adhesive agent composition. An aliphatic epoxide compound is a compound which contains in one molecule preferably two or more, and more preferably four or more epoxy groups. This is because the more the epoxy group has functionalities, the higher the effect of inhibiting creep or flow of an adhesive agent composition at a high temperature region, and the adhesive strength at

a high temperature becomes large.

As the above-mentioned compound containing two or more epoxy groups, reaction products of polyhydric alcohols and epichlorohydrin are preferred. Examples of the aliphatic epoxide compound include glycidyl esters of a fatty acid, glycidyl ethers of an aliphatic polyhydric alcohol, and cyclic aliphatic epoxide compounds. For the epoxide compound, in particular, a glycidyl ester of a long-chain fatty acid, a glycidyl ether of a polyhydric alcohol, or the like which is the above-mentioned flexible epoxy resin is preferably used.

Specific examples of the aliphatic epoxide compound include a reaction product of polyhydric alcohols such as diethylene glycol diglycidylether, polyethylene diglycidylether, polypropylene glycol diglycidylether, neopentylglycol diglycidylether, 1,6-hexanediol diglycidylether, glycerol polyglycidylether, trimethylolpropane polyglycidylether, polyglycerol polyglycidylether, pentaerythiol polyglycidylether, diglycerol polyglycidylether, and sorbitol polyglycidylether, and epichlorohydrin.

Among the reaction products of polyhydric alcohols and epichlorohydrin, polyglycerol polyglycidyl ether and sorbitol polyglycidyl ether are particularly preferred. This is because, since, in these compounds, the epoxy group is polyfunctional and decrease in adhesive strength at a high temperature by flow or creep due to a stress at an adhesive agent layer at a high temperature is small, and the compounds have a long chain flexible main skeleton structure and have a flexibility, curing and shrinkage of adhesive agent layer due to cross-linking rarely occur and decrease in the adhesive strength due to the internal strain stress becomes small. For the sorbitol polyglycidyl ether, polyglycerol polyglycidyl ether, or novolac type epoxy resin, commercially available chemical agents can be used.

Such aliphatic epoxide compounds may be used by dissolving them in water, or, dispersing them in water by emulsification. In order to obtain an emulsified liquid, for example, such a polyepoxide compound is dissolved in water as it is, or, a mixture obtained by dissolving the compound in a small amount of solvent as needed can be emulsified in water by using a known emulsifier such as an alkylbenzenesulfonic acid soda, a dioctyl sulphosuccinate sodium salt, or a nonylphenolethylene oxide adduct.

The adhesive agent composition used in the present invention preferably further comprises at least one selected from the group consisting of (E) a metal salt, (F) a metal oxide, and (G) rubber latex. When the metal salt or the metal oxide among the above is contained in an adhesive agent composition as a filler, the cost thereof becomes favorable because the filler is inexpensive, and at the same time, these fillers can be used for the purpose of providing the adhesive agent composition with ductility or strong tenacity.

For the (E) metal salt and the (F) metal oxide, a polyvalent metal salt or a polyvalent metal oxide is preferred. The term "metal" herein includes metalloids such as boron and silicon. A polyvalent metal salt or a polyvalent metal oxide has, compared with a monovalent alkali such as sodium hydroxide, a small effect of deteriorating a resin material to be used as a base material such as polyester by alkaline hydrolysis, which is preferred. At the same time, an effect of cross-linking between polymers containing carboxyl groups in the adhesive agent composition by an ion bond interaction can be expected. Examples of the polyvalent metal salt include a divalent or higher valent sulfate, a nitric acid salt, acetate, a carbonic acid salt, chloride, hydroxide, silicate or the like of calcium, magnesium, zinc, barium, aluminium, iron, nickel or the like. Examples of the polyvalent metal oxide include oxides of magnesium, calcium, barium, zinc, aluminium, titanium, boron, silicon, bismuth, manganese, iron, nickel, or, bentonite, silica, zeolite, clay, talc, satin white, and smectite whose constituents are these oxides. Such fillers of metal salts or metal oxides are preferably added to the adhesive agent composition as a fine particle, and the average particle size thereof is preferably 20 μm or smaller, and particularly preferably 1 μm or smaller. Metal salts and metal oxides can be used by dispersing in water using a known surfactant or water-soluble polymer. In the present invention, a relatively stable water dispersion is obtained by using a water-soluble polymer as its protective colloid, but a method of obtaining a water dispersion is not particularly restricted thereto.

For the (G) rubber latex, a known rubber latex can be used. Examples thereof include vinylpyridine-conjugated diene copolymer latex and the modified latex thereof, styrene-butadiene copolymer latex and the modified latexes thereof, acrylonitrile-butadiene copolymer latex and modified latex thereof, and natural rubber latex. One or more of these can be contained. For the modified latexes, carboxyl modification or epoxy modification can be used.

The formulation ratio of the adhesive agent composition used in the present invention is preferably selected as follows: the content of the (A) component is 10 to 75 % by mass based on the dry weight of the adhesive agent composition, in particular 15 to 65 % by mass, and further 20 to 55 % by mass, the content of the (B) component is 5 to 75 % by mass based on the dry weight of the adhesive agent composition, in particular 15 to 60 % by mass, and further 18 to 45 % by mass, the content of the (C) component is 15 to 77 % by mass based on the dry weight of the adhesive agent composition, in particular 15 to 55 % by mass, and further 18 to 55 % by mass, and the content of the (D) component is 9 to 70 % by mass based on the dry weight of the adhesive agent composition, in particular 10 to 45 % by mass, and further 15 to 30 % by mass.

The content of the (E) component which is an optional component is preferably 50 % by mass or smaller based on the dry weight of the adhesive agent composition, and more preferably 3 to 40 % by mass. The content of the (F) component is preferably 50 % by mass or lower based on the dry weight of the adhesive agent composition, and more

preferably 3 to 40 % by mass. Further, the content of the (G) component is 18 % by mass or lower based on the dry weight of the adhesive agent composition and more preferably 10 % by mass or lower.

The adhesive agent composition used in the present invention may further contains, in addition to the above-mentioned components (A) to (G), a solvent such as water or an organic solvent, a water-soluble resin or a water-dispersible resin such as a water-soluble and/or water-dispersible polyester resin, a water-soluble and/or water-dispersible nylon resin, an aqueous urethane resin having no cross-linking groups, or water-soluble cellulose copolymer. Such a water-soluble resin or a water-dispersible resin is usually contained by preferably by 30 % by mass or smaller based on the dry weight of the adhesive agent composition, but the content is not limited thereto.

The above-mentioned adhesive agent composition has an effect in a method in which, for example, in the case of adhesion between an adherend of a synthesized resin material such as a synthesized fiber and an adherend of a rubber composition containing sulfur, a vulcanizing agent contained in any of the adherends migrates to the adhesive agent composition, whereby the adhesive agent composition is cross-linked by a vulcanizing agent.

Examples of the above-mentioned vulcanizing agent include sulfur; a thiuram polysulfide compound such as tetramethylthiuramdisulfide or dipentamethylene thiuram tetrasulfide; and an organic vulcanizing agent such as 4,4-dithiomorpholin, *p*-quinonedioxime, *p,p*'-dibenzoquinonedioxime or cyclic sulfur imide.

In the present invention, preferably an adhesive agent treatment is further performed on a cord treated with the above-mentioned epoxy-based adhesive agent composition by an RFL-based adhesive agent composition. After twisting the cord, an adhesive agent treatment is performed on the twisted cord by using the above-mentioned epoxy-based adhesive agent composition, then a treatment is further performed on the cord by using an RFL adhesive agent, whereby an more excellent adhesion level in a residual adhesion evaluation method can be obtained. Usually, when the number of adhesive agent treatment steps is increased, the physical properties of the cord changes due to the effect of a warming step therebetween, which has not been considered to be preferred. However, by combining an adhesive agent treatment by an epoxy-based adhesive agent composition and an adhesive agent treatment by an RFL adhesive agent on a cord using the above-mentioned specific polyester filament, a polyester cord having an excellent adhesion level in a residual adhesion evaluation method to rubber can be obtained.

The above-mentioned adhesive agent treatment by an RFL adhesive agent can be performed in accordance with a conventional method, and not particularly restricted. For the RFL-based adhesive agent treatment liquid, for example, a resorcin-formalin initial condensate/rubber latex (for example, 30 to 60% emulsion of styrenebutadiene latex, vinylpyridine styrene-butadiene terpolymer latex or the like) = 1:2 to 1:20 (mass ratio) can be used. In addition to these component, as needed, a resorcin-formalin condensate obtained by a novolac forming reaction, a blocked isocyanate water dispersion containing a methylenediphenyl dipolyisocyanate, and an adhesive property improver having a structure in which aromatics are bonded by methylene can be added. When a cord is treated with an RFL-based adhesive agent treatment liquid, the dry weight of the RFL-based adhesive agent composition which coats the cord is set to 0.5 to 6.0 % by mass, and preferably 2 to 6 % by mass with respect to the weight of the cord. The treated cord can be dried at a temperature of, for example, 100 to 150°C, and then subjected to a heat treatment at a temperature of 200 to 250°C.

By a method in which a polyester cord obtained by performing an adhesive agent treatment by the above-mentioned epoxy-based adhesive agent composition, and preferably, RFL adhesive agent on the above-mentioned cord as mentioned above is embedded in an unvulcanized rubber to be vulcanized, or the like, the cord and the rubber can be rigidly bonded to each other.

Next, a water-soluble adhesive containing RFL which can be preferably used in the present invention will be described. The RFL-based adhesive agent composition preferably used in the present invention is an RFL adhesive agent liquid containing resorcin, formaldehyde, rubber latex, and further containing an emulsion-polymerized blocked isocyanate compound, and ammonia, wherein the content of the emulsion-polymerized blocked isocyanate compound is preferably 15 to 45 % by mass.

In the formulation using an RFL adhesive agent liquid and an emulsion-polymerized blocked isocyanate compound, by using only ammonia as a catalyst for the condensation reaction between resorcin and formaldehyde without using a metal catalyst such as sodium hydroxide, and further, by setting the content of the emulsion-polymerized blocked isocyanate compound in the above-mentioned range, an adhesion level of a residual adhesion evaluation method can be improved by one-bath treatment.

In the present invention, ammonia is used as a reaction catalyst because a metal compound catalyst such as sodium hydroxide promotes curing of an RFL adhesive agent resin, and is not suitable for ensuring the flexibility of an adhesive agent resin. Ammonia is used as a reaction catalyst also because a metal compound catalyst promotes deterioration of rubber or a cord since the metal compound catalyst is strongly basic. In contrast, since ammonia is weakly basic, a curing reaction proceeds at an appropriate rate. By this, the flexibility of the adhesive agent can be retained. Since ammonia can be removed from the system of an ammonia resol resin by vaporization, physical softening and rubber deterioration by a base can be inhibited.

The content of emulsion-polymerized blocked isocyanate compound is set to 15 to 45 % by mass because when the content of the emulsion-polymerized blocked isocyanate is higher than 45 % by mass, the adhesive agent

composition becomes hard although the adhesive strength is sufficiently obtained, and the workability during manufacturing a tire becomes hard to be ensured, as well as the amount is not preferred from the viewpoint of the cost. On the other hand, the content of the emulsion-polymerized blocked isocyanate compound is less than 15 % by mass, the affinity to an inactive cord such as polyester becomes insufficient, which makes it difficult to ensure the adhesive strength. The above-mentioned content is preferably 20 to 40 % by mass. When the blocked isocyanate compound is emulsion polymerized, an effect that a blocked isocyanate compound is not precipitated during the adhesive agent treatment, and that workability can be ensured can be obtained.

In the above-mentioned water-soluble adhesive containing RFL, ammonia is preferably added at a rate of 0.5 to 5.0 mol to 1.0 mol of resorcin. When the amount of ammonia added to 1.0 mol of resorcin is smaller than 0.5 mol, the effect of resorcin resin catalyst is not sufficient, and it takes time for an aging reaction, and thus the adhesive property may not be ensured since the aging reaction does not proceed sufficiently. Since the amount of the ammonia resol is small, the adhesive agent resin may be cured. On the other hand, when the amount of ammonia added is larger than 5.0 mol, the reaction system is promoted, which may deteriorate the flexibility of adhesive agent resin.

The rubber latex is preferably a copolymer rubber latex of vinylpyridine, styrene and butadiene, and more preferably, is copolymer rubber latex having a double structure composed of two-stage polymerization of vinylpyridine, styrene and butadiene.

The copolymer rubber latex having a double structure composed of two-stage polymerization of vinylpyridine, styrene and butadiene is a copolymer rubber latex of vinylpyridine, styrene, and butadiene, which can be obtained by (i) polymerizing a monomer mixture constituted by styrene content of 10 to 60 % by mass, butadiene content of less than 60 % by mass and vinylpyridine content of 0.5 to 15 % by mass, and then (ii) polymerizing a monomer mixture constituted by a styrene content of 10 to 40 % by mass, butadiene content of 45 to 75 % by mass and vinylpyridine content of 5 to 20 % by mass, in a smaller styrene content than in (i).

Further preferably, for the rubber latex, a core-shell type copolymer rubber latex of vinylpyridine, styrene, and butadiene having a styrene-rich core is used. By using a core-shell type rubber latex having a styrene-rich core, The adhesion deterioration speed of an RFL formulation containing isocyanate which has a high cross-linking property and whose reaction easily proceeds can be restricted, and heat resistant adhesive property in rubber can be favorably ensured.

The blocking agent dissociating temperature of a blocked isocyanate compound is preferably 150°C to 210°C. When an adhesive agent treatment of an organic fiber cord is performed, a step of drying treatment is performed at 150°C or higher in many cases. Accordingly, by setting the blocking agent dissociating temperature of a blocked isocyanate compound in the adhesive agent liquid to 150°C or higher, and thus setting both the temperatures to 150°C or higher, it is inhibited that an adhesive agent composition remains behind at the center of the cord. As the result, the adhesive agent composition can be coated uniformly on the outside of the tire cord, whereby the heat resistant adhesive property in rubber can be further improved. When the blocking agent dissociating temperature of the blocked isocyanate compound is higher than 210°C, since the adhesive agent liquid surface dries first, then the adhesive agent composition inside dries later, many resin scales which are called "egg blister" may be generated. Accordingly, the dissociating temperature of a blocking agent of a blocked isocyanate compound is preferably 210°C or lower.

The RFL adhesive agent liquid is not particularly restricted, and a known RFL adhesive agent liquid can be used. For example, an RFL adhesive agent liquid satisfying the expression below (1) and (2):

$$1/2.3 \leq R/F \leq 1/1.1 \qquad (1)$$

$$1/10 \leq RF/L \leq 1/4 \qquad (2)$$

letting the molar ratio of the total amount of resorcin /formaldehyde be R/F, and letting the ratio of the total mass of resorcin and formaldehyde to the total mass of the solid of the rubber latex be RF/L, can be preferably used.

In the present invention, the adhesive agent treatment using a water-soluble adhesive containing an epoxy resin or a water-soluble adhesive containing RFL can be performed in accordance with a conventional method, and not particularly restricted. Specifically, an adhesive agent treatment can be performed by at least employing an impregnation step in which a cord is impregnated with the above-mentioned adhesive agent composition and a drying step in which the obtained cord is dried. For example, as illustrated in Fig. 3, a cord 22 fed by an unwinding apparatus 21 is dipped in an adhesive agent composition 23, and the cord 22 is impregnated with the adhesive agent composition 23, and then, the cord 22 is transferred to a drying zone 24 to dry the cord 22; next, the dried cord 22 is passed to a heat set zone 25 and a normalizing zone 26, subjected to a heat treatment, and the cord is wound by a winding apparatus 27 after cooling, thereby obtaining a cord on which adhesive agent treatment is performed.

The polyester cord of the present invention is preferably pretreated with an epoxy compound prior to an adhesive

agent treatment in which the above-mentioned water-soluble adhesive containing an epoxy resin or a water-soluble adhesive containing RFL is used. The pretreatment using an epoxy compound is not particularly limited, and a known method can be used. For example, the pretreatment is performed by subjecting a polyester cord to dip treatment using a pretreatment liquid containing an epoxy resin in a state of an aqueous dispersion.

A method of coating an adhesive agent composition on a cord is not particularly restricted, and examples thereof include a method in which a cord is dipped in an adhesive agent composition, and also include brush painting, casting, spraying, roll coating, and knife coating. In particular, when a method in which a cord is dipped in an adhesive agent composition, it is preferable that the above-mentioned adhesive agent composition of the present invention is diluted and a cord is impregnated therewith, then the obtained organic fiber cord is dried. By this, a cord having adhesion fatigue property and heat resistant adhesive property in rubber can be obtained by one-bath treatment.

A cord coated with an adhesive agent composition can be dried at a temperature of, for example, 150 to 210°C. As mentioned above, the blocking agent dissociating temperature of a blocked isocyanate compound in an adhesive agent composition used in the present invention is suitably 150 to 210°C. Accordingly, by setting the drying temperature to 150 to 210°C, it is inhibited that an adhesive agent composition remains behind at the center of the cord, the outside of the cord can be coated with the adhesive agent composition uniformly. By this, the heat resistant adhesive property in rubber can be favorably improved.

During the adhesive agent treatment, the cord tension T at the time of impregnation can be set to 0.3 g/d or lower, preferably 0.2 g/d or lower, and more preferably 0.1 g/d or lower. Further, in a heat treatment composed of heat-setting and normalizing, the treatment temperature can be set to 210 to 250°C, the treatment time to 30 to 120 seconds, and the cord tension to 0.05 to 1.20 g/d for each.

As mentioned above, by a method in which a polyester cord obtained by performing an adhesive agent treatment using a water-soluble adhesive containing an epoxy resin or a water-soluble adhesive containing RFL on the above-mentioned cord is embedded in an unvulcanized rubber to be vulcanized, or the like, the cord and the rubber are rigidly bonded to each other.

In the present invention, preferably, the total fineness of the polyester cord is 2000 to 4000 dtex. When the total fineness is less than 2000 dtex, the cord diameter is small and the cord strength and cord rigidity are considerably small, which therefore causes problems such as deterioration of the high-speed durability or deterioration of wear resistance accompanied by tire protrusion during high-speed traveling. On the other hand, when the total fineness is above 4000 dtex, the thickness of the belt reinforcing layer is too large and the amount of rubber used is also large, and thus the weight of the tire increases, which causes problems such as deterioration of rolling resistance.

Further, in the present invention, preferably, the ply twists of the polyester cord constituting a belt reinforcing layer is 10 to 40 times/10 cm. Still further, in the present invention, preferably, the cable twists of the polyester cord is 10 to 40 times/10 cm. By making the ply twists and cable twists in the above range, it becomes possible to suppress a failure of a tire which is manufactured such that the steel belt layer and belt reinforcing layer are further expanded during vulcanization while balancing the cord fatigability and cutting resistance.

Still further, in the present invention, preferably, the end count Ec (/5 cm) of the polyester cord per unit width at a middle region 9A which is 70% of the steel belt layer in the maximum width centering on the equator of the belt reinforcing layer 9 is smaller than the average end count Es (/5 cm) of both end regions which are on the outside of the middle region of the belt reinforcing layer 9 (see Fig. 2A). In other words, by making the end count of the both end regions 9B larger than the end count of the middle region 9A, an effect of inhibiting vibration conducted from a road surface and generated at an end portion of a belt is improved. Since the middle region 9A of a belt buckles during run-flat traveling and contacting load of the both end regions 9B increases, by making the rigidity of the both end regions 9B larger than that of the middle region 9A, the run-flat durability can favorably be improved. By adjusting the relationship between the end count of the middle region and the end count of the both end regions of a belt reinforcing layer, the run-flat durability can be further improved.

In order to favorably obtain the above effect, preferably, when $Ec \geq 35$, the relationships represented by:

$$40 \leq Es \leq 150$$

$$2.0 \geq Es/Ec \geq 1.0$$

are satisfied, and
when $Ec < 35$, the relationship represented by:

$$40 \leq Es \leq 150$$

$$4.0 \geq Es/Ec \geq 1.4$$

is satisfied.

In a tire of the present invention, a belt reinforcing layer can be manufactured in a conventional method by applying a cord/rubber complex formed by rubberizing a polyester cord which satisfies the above requirements. As mentioned above, in this case, a method in which a belt reinforcing layer 4 is formed by spirally winding a strip formed by rubberizing 1 to 20 polyester cords having a width smaller than an arrangement width of a belt reinforcing layer 4 in the tire width direction a plurality of times until a predetermined width dimension is obtained is particularly preferably used. By forming a reinforcing layer by continuously winding a strip, a joint portion is not created in the tire circumferential direction, thereby reinforcing a belt 3 uniformly. In order to make the end count of the both end regions 9B larger than the end count of the middle region 9A, the belt reinforcing layer is formed by winding a strip formed by rubberizing 1 to 20 polyester cords with a space. In other words, the above-mentioned strip is made such that both end regions 9B are dense, and the middle region 9A is sparse.

A pneumatic radial tire of the present invention is not particularly restricted except that a polyester cord taken out from a belt reinforcing layer 9 satisfies that the ply twist coefficient $\alpha 1$ and the cable twist coefficient $\alpha 2$ represented by the following formulae:

$$\alpha 1 = N1 \times (0.125 \times D1/\rho)^{0.5} \times 10^{-3} \qquad (1)$$

$$\alpha 2 = N2 \times (0.125 \times D2/\rho)^{0.5} \times 10^{-3} \qquad (2)$$

(N1 is the ply twists (/10 cm), D1 is the fineness (dtex) per one ply twist thread, N2 is the cable twists (/10 cm), D2 is the total fineness (dtex) of the cord, and $\rho$ is the density (g/cm$^3$) of the polyester cord) are 0.1 to 0.4 and 0.1 to 0.45, respectively, the initial tensile resistance degree is 7 to 20 GPa, the adhesion level in a residual adhesion evaluation method after an adhesive agent treatment is 5 N/cord or higher. For example, although not illustrated, on the innermost layer of a tire, an inner liner is usually arranged, and on a tread surface, a tread pattern is appropriately formed. Further, in the pneumatic tire of the present invention, as a gas with which the inside of the tire is filled, a normal air or an air whose oxygen partial pressure is changed, or, an inert gas such as nitrogen can be used.

## EXAMPLES

The present invention will now be described in more detail by way of Examples.

### < Preparation of adhesive agent composition (1) >

For the adhesive agent composition (1), the following components were used. For the thermoplastic polymer (A), those mentioned below were used.

(A-1) Epocros K1010E, a product manufactured by NIPPON SHOKUBAI CO., LTD., solid content concentration 40%, (acryl-styrene copolymer emulsion containing 2-oxazoline group), polymer Tg: -50°C, the amount of oxazoline groups: 0.9 (mmol/g, solid)

(A-2) Epocros K1030E, a product manufactured by NIPPON SHOKUBAI CO., LTD., solid content concentration 40%, (acryl-styrene copolymer emulsion containing a 2-oxazoline group), polymer Tg: 50°C, the amount of oxazoline groups: 0.9 (mmol/g, solid)

(A-3) Polymer obtained by the below-mentioned Synthesis example, (urethane-based copolymer emulsion containing a hydrazino group)

### < Synthesis example > Preparation method of (A-3)

A hydrazino group-containing aqueous urethane resin was manufactured in accordance with the description of Synthesis example 1 described in Japanese Unexamined Patent Application Publication No. H10-139839. Specifically,

to a four-necked flask provided with a reflux condenser, a thermometer and a stirrer, 80 parts by mass of polycaprolactone (manufactured by Daicel Corporation, molecular weight 2,000), 99.9 parts by mass of isoholon diisocyanate, 30 parts by mass of dimethylol propionic acid, 100 parts by mass of polyester polyol (manufactured by UNITIKA Ltd., ELITEL3320, molecular weight 2,000), 28.1 parts by mass of a propylene glycol diglycidylether-acrylic acid adduct (manufactured by kyoeisha Chemical Co., Ltd.), 30 parts by mass of N-methyl pyrrolidone, and, 150 parts by mass of ethyl acetate were added, and then stirred under a nitrogen atmosphere, heated to 90°C and the mixture was subjected to a urethanization reaction at the temperature for one hour. Thereafter, the mixture was cooled to 40°C to obtain a prepolymer having NCO terminal. Next, to the prepolymer, 20 parts by mass of triethylamine was added and neutralized, and then 600 parts by mass of ion exchanged water was added thereto. Next, to the reaction system, 12.0 parts by mass of adipic acid dihydrazide was added, and stirred for one hour at 50°C, and then ethyl acetate was distilled off under reduced pressure, thereafter, water dilution was performed to attain the solid content concentration of 30%, thereby obtaining a urethane-based copolymer emulsion having a hydrazine terminal. The weight-average molecular weight thereof based on polystyrene measured by GPC was Mw = 35,000.

For the water-soluble polymer (B), the following components were used.

(B-1) ISOBAM 10, KURARAY CO., LTD., solid content concentration 100%, (copolymer of isobutylene and maleic anhydride), molecular weight: 160,000 to 170,000
(B-2) ISOBAM 04, KURARAY CO., LTD., solid content concentration 100%, (copolymer of isobutylene and maleic anhydride), molecular weight: 55,000 to 65,000
(B-3) ISOBAM 110, KURARAY CO., LTD., solid content concentration 100%, (a derivative in which maleic anhydride unit of copolymer of isobutylene and maleic anhydride was reacted with ammonia to obtain a mono amide unit of a maleic acid, then heated to close the ring to obtain a maleimide unit), molecular weight: 190,000 to 200,000

For the compound (C), the following components were used.

(C-1) DELION PAS-037, manufactured by TAKEMOTO OIL & FAT Co., Ltd., (diphenylmethane bis(4,4'-carbamoyl-ε-caprolactam): containing the molecular structure of diphenylmethane diisocyanate and a blocking agent), solid content concentration 27.5%
(C-2) Penacolite R-50, manufactured by Indspec Chem.Co., (condensate of resorcin and formaldehyde by novolac forming reaction), solid content concentration 50%
(C-3) ELASTRON BN77, manufactured by DAI-ICHI KOGYO SEIYAKU Co., Ltd., (heat reactive aqueous urethane resin containing the molecular structure of methylenediphenyl), solid content concentration 31%

For the aliphatic epoxide compound (D), the following component was used. (D-1) DENACOL EX614B, manufactured by Nagase ChemteX Corporation, (sorbitol polyglycidyl ether)

[Table 1]

| | Adhesive agent composition | | | | | |
|---|---|---|---|---|---|---|
| | (1)-1 | | (1)-2 | | (1)-3 | |
| | component | Blending ratio (% by mass) | component | Blending ratio (% by mass) | component | Blending ratio (% by mass) |
| Thermoplastic resin (A) | A-1 | 5 | A-2 | 30 | A-3 | 30 |
| Water-soluble polymer (B) | B-1 | 15 | B-2 | 20 | B-3 | 20 |
| Compound (C) | C-1 | 20 | C-2 | 40 | C-3 | 40 |
| Aliphatic epoxide compound (D) | D | 60 | D | 10 | D | 10 |

< Adjustment of adhesive agent composition (2))

An adhesive agent composition was prepared by the formulation listed on the Table 2 below, and the adhesive agent was diluted and adjusted such that 20 % by mass of an aqueous adhesive agent in the ratio mentioned below

was obtained. The blocked isocyanate compound was added after an RFL adhesive agent liquid was mixed and aged at 20°C for 24 hours, immediately before use. The blocked isocyanate compound used was manufactured by DAI-ICHI KOGYO SEUYAKU Co., Ltd.: ELASTRON BN69 (blocking agent dissociating temperature 120°C) and BN27 (blocking agent dissociating temperature 180°C). Latex was experimentally made by emulsion polymerization.

[Table 2]

| | | | Adhesive agent liquid | | | |
|---|---|---|---|---|---|---|
| | | | (2) -1 | (2) -2 | (2)-3 | (2)-4 |
| Adhesive agent liquid formulation mass ratio | Resorcin | | 8 | 16 | 16 | 8 |
| | Formaldehyde | | 4 | 8 | 8 | 4 |
| | Latex | | 100 | 100 | 100 | 100 |
| | Catalyst | Sodium hydroxide | 0 | 0 | 0 | 0 |
| | | Ammonia | 4 | 2 | 2 | 4 |
| | Blocked isocyanate compound | | 80 | 30 | 50 | 6 |
| Catalyst /resorcin (molar ratio) | | | 3.2 | 0.8 | 0.8 | 3.2 |
| Isocyanate com pound ratio ma in adhesive agent (% by ss) | | | 41 | 19 | 28 | 5 |
| Rubber latex composition (% by mass) | Core ratio | | 70 | 70 | 0 | 0 |
| | Core vinylpyridine | | 10 | 10 | 0 | 0 |
| | Core styrene | | 55 | 55 | 0 | 0 |
| | Core butadiene | | 35 | 35 | 0 | 0 |
| | Shell ratio | | 30 | 30 | 100 | 100 |
| | Shell vinylpyridine | | 15 | 15 | 15 | 15 |
| | Shell styrene | | 15 | 15 | 15 | 15 |
| | Shell butadiene | | 70 | 70 | 70 | 70 |
| Isocyanate compound | Blocking agent dissociating temperature (°C) | | 180 | 180 | 180 | 180 |
| Drying temperature (°C) | | | 180 | 180 | 180 | 180 |

< Adjustment of adhesive agent composition (3) >

Epocros K1010E, a product manufactured by NIPPON SHOKUBAI CO., LTD., solid content concentration 40%, (acryl-styrene copolymer emulsion containing 2-oxazoline group), polymer Tg: -50°C, the amount of oxazoline groups: 0.9 (mmol/g, solid) was adjusted to have a solid content concentration of 5% to be used.

< Manufacturing of polyester fiber >

By using a polyethylene terephthalate chip having a high carboxy group terminal having an intrinsic viscosity of 1.03, high-speed spinning by a melt spinning method and multi-stage stretching were performed, and an epoxy treatment was performed on the surface thereof to prepare a below-mentioned polyester fiber. 0.2 parts by mass of the oil agent used for the epoxy treatment was attached to 100 parts by mass of the fiber, and the amount of polyglycerolpolyglycidylether which was an epoxy compound component to the surface of the fiber was 0.12 % by mass.

The polyester fiber had physical properties, an intrinsic viscosity of 0.91, a fineness of 1130 dtex, 384 filament, a strength of 6.9 cN/dtex, a degree of elongation of 12%, and a dry heat shrinkage of 10.5%, an amount of terminal carboxy group of 22 equivalent/ton, a long period according to small-angle X-ray diffraction of 10 nm, an amount of terminal carboxy group on the fiber surface of 7 equivalent/ton, a crystal size in the fiber lateral axis direction of 45 $nm^2$, an amount of terminal methyl group of 0 equivalent/ton, a titanium oxide content of 0.05 % by mass, and an amount of surface epoxy group (epoxy index) of $0.1 \times 10^{-3}$ equivalent/kg.

Here, regarding the above-mentioned polyester fiber, the intrinsic viscosity, the strength and degree of elongation, the dry heat shrinkage, the amount of terminal carboxy group, the long period and crystal size in the fiber lateral axis direction according to small-angle X-ray diffraction, the amount of terminal carboxy group on the fiber surface, the amount of terminal methyl group, the titanium oxide content, and the amount of surface epoxy group were each measured in accordance with the following description. The same applies hereinafter.

< Intrinsic viscosity >

Polyester chip and polyester fiber were dissolved in orthochlorophenol at 100°C, for 60 minutes to give a diluted solution, then the intrinsic viscosity thereof was calculated by the value obtained by measuring the diluted solution using a Ubbelohde viscometer at 35°C.

< Amount of terminal carboxy group >

Into a flask, 40.00 g of a polyester sample powderized by using a pulverizer and 100 ml of benzyl alcohol were added, and then, the polyester sample was dissolved in the benzyl alcohol under nitrogen air at 215±1°C for 4 minutes. After dissolving, the sample solution was cooled to room temperature, then adding thereto a suitable amount of 0.1 % by mass solution of phenol red in benzyl alcohol, followed by rapid titration with N normality of benzyl alcohol solution of sodium hydroxide, to obtain the amount of titration till the color changed as A ml. As a blank, to 100 ml of benzyl alcohol, the same amount of 0.1 % by mass solution of phenol red in benzyl alcohol as above was added, and a rapid titration was performed with N normality of benzyl alcohol solution of sodium hydroxide, to obtain the amount of titration till the color changed as B ml. Using these values, the terminal COOH group content in the polyester sample was calculated by the expression below.

$$\text{terminal COOH group content (eq/}10^{0}\text{ g)} = (A - B) \times 10^{3} \times N \times 10^{6}/40$$

The benzyl alcohol used here was those stored in a light shielding bottle which was obtained by distilling a special grade reagent. As the N normality of benzyl alcohol solution of sodium hydroxide, a solution whose normality N was precisely determined by titration by a sulfuric acid solution having an already-known concentration was used.

< Amount of terminal methyl group >

After hydrolyzing a polyester into an acid component and a glycol component, a methyl ester component was quantitated by gas chromatography to obtain the value thereof, then the amount of terminal methyl group was calculated using the value.

< Titanium oxide content >

The content of each element was measured by an X-ray fluorescence spectrometer (manufactured by Rigaku Corporation, 3270E type) to perform a quantitative analysis. During fluorescent X-ray analysis, a polyester fiber resin polymer sample was heated in a press for 2 minutes at 260°C under a pressuring condition of 7 MPa to manufacture a test molding having a plane surface under pressuring condition to perform measurement.

< X-ray diffraction >

X-ray diffraction for polyester composition fiber was performed by using an X-ray diffraction apparatus (manufactured by Rigaku Corporation, RINT-TTR3, Cu-Kα ray, tube voltage 50kV, current 300 mA, parallel beam method). The long period interval was calculated by using a small-angle X-ray scattering measurement device and using a conventionally known method, in other words, by using a diffraction line of a meridian interference obtained by the irradiation of Cu-Kα ray having a wavelength of 1.54 Å as a beam source to a fiber axis at a right angle, and by using the Bragg's equation. The crystal size was determined by the full-width at half maximum of (010)(100) strength distribution curve of equator scanning from X-ray wide angle diffraction by using the Scherrer equation.

< Amount of terminal carboxy group on fiber surface >

In accordance with JIS K0070-3.1 neutralization titration, the amount of carboxy group (acid value) on the fiber

surface was determined. Specifically, to about 5 g of a fiber sample, 50 ml of diethyl ether/ethanol = 1/1 solution was added, and few droplets of phenolphthalein solution were added thereto as an indicator, followed by ultrasonic shaking at room temperature for 15 minutes. The solution was titrated with 0.1 ml of a potassium hydroxide ethanol solution (factor value f = 1.030), and measured the dropping amount of the indicator to the end point when pale pink continued for 30 seconds to calculate the acid value by the following formula:

$$\text{acid value A (eq/ton)} = (B \times 1.030 \times 100)/S$$

(wherein B represents the dropping amount of 0.1 ml potassium hydroxide ethanol solution (ml), and S represents the amount of the sample (G)).

< Strength and degree of elongation of fiber >

The strength and degree of elongation of a fiber was measured by using a tensile load measuring instrument (manufactured by SHIMADZU CORPORATION, Autograph) in accordance with JIS L-1013.

< Dry heat shrinkage >

In accordance with JIS-L1013, the fiber was left to stand still in a room where the temperature and the humidity were controlled at 20°C and 65%RH for 24 hours, then subjected to a heat treatment of 180°C × 30 minutes without applying no load in a drying machine to calculate the dry heat shrinkage by the difference between the length before the heat treatment and the length after the treatment.

< Epoxy index (EI) >

For the polyester fiber after heat treatment, the epoxy index (EI: epoxy equivalent number per 1 kg of fiber) was measured in accordance with JIS K-7236.

< Manufacturing of tire >

Each of multipurpose tire cords which were made of a material and had a cord size listed on Tables 3 to 7 below was subjected to an adhesive agent treatment by using adhesive agents (1) to (3) also listed on the same Tables, and ten obtained cords were rubberized to manufacture a strip. The cord which was subjected to an adhesive agent treatment by using the obtained adhesive agent composition (1)-1 was further subjected to an adhesive agent treatment by using an RFL-based adhesive agent composition. Side reinforcing type pneumatic radial tires having a belt reinforcing layer structure listed on Tables 3 to 5 were manufactured in a tire size of 225/45R17 by spirally winding the obtained strip such that the cord had an angle of 0° to 5° with respect to the tire circumferential direction. One radial carcass was used and a rayon fiber cord was used. For each of the tire, the same steel belt layer was used, and the arrangement angles of the steel cords were +30° and -30° with respect to the tire circumferential direction. The initial tensile resistance degree and adhesion level by a residual adhesion evaluation were adjusted by changing the adhesive agent type, cord material, cord size, and twist coefficient.

For the obtained tire, an evaluation of the high-speed durability, run-flat durability, and vehicle inside noise was performed in the following procedure. The initial tensile resistance degree in the Tables 3 to 7 refers to a value calculated by the test method defined in accordance with JIS L 1017. The adhesion level in a residual adhesion evaluation method was obtained as follows: as illustrated in Fig. 4, an organic fiber cord 101 was embedded in rubber matrix such that cord layers are parallel to each other, and a rubber test piece 100 having a width W: 50 mm, a length L: 500 mm, a height H: 5.5 mm, an end count of cords: 50 /50 mm, a distance $h_1$ between cords: 2.5 mm, and a distance $h_2$ from the center of the cord to the surface: 1.5 mm was manufactured. Then, as illustrated in Fig. 5, the rubber test piece 100 was hung on a pully 102, a load of 50 kg/inch was applied in the direction of the cord, tension and compressive force were cyclically applied at 100 rpm for 300,000 times, the pull-up adhesive strength (N/cord) of the cord on the pulling side was measured to obtain the adhesion level in a residual adhesion evaluation method. The tension rate at the time of adhesion test was set to 300 mm/min.

< High-speed durability >

Each test tire was mounted to a prescribed rim, and the tire was inflated to a prescribed inner pressure.

Thereafter, a high-speed durability drum test was performed using a prescribed load. The test was started at 120 km/h, and the tire was allowed to travel by increasing 10 km/h stepwisely per 20 minutes to determine the speed at which a failure occurred. The evaluation was performed by an index setting Comparative Example 1 to 100. The higher the value of the index was, the more excellent the high-speed durability was. The results are listed on the Tables 3 to 7 in combination.

< Run-flat durability >

Each test tire was mounted to a prescribed rim, and the tire was inflated to a prescribed inner pressure. Thereafter, a valve core was removed to make the inner pressure 0 kPa, a prescribed load was applied, and what minutes to travel at a traveling speed of 80 km/h by using a drum until a failure occurred was determined. The evaluation was performed by using the determined value. The evaluation was performed by indicating each failure occurred time as an index setting the failure occurred time of Comparative Example 1 to 100. The higher the value was, the more excellent the run-flat durability was. The results are listed on the Tables 3 to 7 in combination.

< Vehicle inside noise >

After each test tire was mounted to a prescribed rim, the tire was mounted on an actual car, and then, the vehicle inside noise was evaluated by performing a sensory test of an evaluation driver. When the vehicle inside noise was obviously improved than that of Comparative Example 1, the evaluation was indicated as "○"; when the vehicle inside noise was similar to that of Comparative Example 1, the evaluation was indicated as "Δ"; and when the vehicle inside noise was deteriorated compared with that of Comparative Example 1, the evaluation was indicated as "×". The results are listed on the Tables 3 to 7 in combination.

[Table 3]

| | Example 1 | Example 2 | Example 3 | Example 4 | Example 5 |
|---|---|---|---|---|---|
| Belt reinforcing layer structure *1 | a | a | a | a | a |
| Adhesive agent type | (1)-1 | (1)-1 | (1)-1 | (1)-1 | (2)-1 |
| Belt reinforcing layer cord material | multipurpose PET for tire cord | multipurpose PET for tire cord | multipurpose PET for tire cord | multipurpose PET for tire cord | multipurpose PET for tire cord |
| Cord size | 1100dtex/2 | 1670dtex/2 | 1100dtex/2 | 1100dtex/2 | 1100dtex/2 |
| Initial tensile resistance degree (GPa) | 10 | 8 | 10 | 10 | 10 |
| Residual adhesion level (N/cord)*2 | 10 | 9 | 10 | 10 | 18 |
| Cable twist coefficient $\alpha 2$ | 0.30 | 0.38 | 0.30 | 0.30 | 0.30 |
| Cable twists (times/10 cm) | 22 | 22 | 22 | 22 | 22 |
| Ply twist coefficient $\alpha 1$ | 0.22 | 0.27 | 0.22 | 0.22 | 0.22 |
| Ply twists (times/10 cm) | 22 | 22 | 22 | 22 | 22 |
| Ec (/5 cm) | 50 | 50 | 40 | 25 | 50 |
| Es (/5 cm) | 50 | 50 | 50 | 60 | 50 |

(continued)

| | Example 1 | Example 2 | Example 3 | Example 4 | Example 5 |
|---|---|---|---|---|---|
| Es/Ec | 1.0 | 1.0 | 1.25 | 2.4 | 1.0 |
| High-speed durability (index) | 120 | 115 | 125 | 115 | 140 |
| Run-flat durability (index) | 110 | 110 | 115 | 120 | 135 |
| Vehicle inside noise | ○ | ○ | ○ | ○ | ○ |
| *1: a represents a belt reinforcing layer structure of Fig. 2A type, and b represents a belt reinforcing layer structure of Fig. 2B type.<br>*2: the adhesion level in a residual adhesion evaluation method | | | | | |

[Table 4]

| | Example 6 | Example 7 | Comparative Example 1 | Comparative Example 2 | Comparative Example 3 |
|---|---|---|---|---|---|
| Belt reinforcing layer structure*1 | b | a | a | a | b |
| Adhesive agent type | (1)-1 | (2)-1 | multipurpose RFL adhesive agent | multipurpose RFL adhesive agent | multipurpose RFL adhesive agent |
| Belt reinforcing layer cord material | Multipurpose PET for tire cord | Multipurpose PEN for tire cord | Multipurpose 6,6-nylon for tire cord | multipurpose PET for tire cord | Multipurpose 6,6-nylon for tire cord |
| Cord size | 1100dtex/2 | 1100dtex/2 | 1400dtex/2 | 1100dtex/2 | 1400dtex/2 |
| Initial tensile resistance degree (GPa) | 10 | 18 | 4 | 10 | 4 |
| Residual adhesion level (N/cord)*2 | 10 | 7 | 15 | 3 | 15 |
| Cable twist coefficient $\alpha 2$ | 0.30 | 0.30 | 0.48 | 0.30 | 0.48 |
| Cable twists (times/10 cm) | 22 | 22 | 34 | 22 | 34 |
| Ply twist coefficient $\alpha 1$ | 0.22 | 0.22 | 0.34 | 0.22 | 0.34 |
| Ply twists (times/10 cm) | 22 | 22 | 34 | 22 | 34 |
| Ec (/5 cm) | 0 | 50 | 50 | 50 | 0 |
| Es (/5 cm) | 50 | 50 | 50 | 50 | 50 |
| Es/Ec | - | 1.0 | 1.0 | 1.0 | - |
| High-speed durability (index) | 105 | 135 | 100 | 70 | 80 |

(continued)

| | Example 6 | Example 7 | Comparative Example 1 | Comparative Example 2 | Comparative Example 3 |
|---|---|---|---|---|---|
| Run-flat durability (index) | 105 | 118 | 100 | 40 | 60 |
| Vehicle inside noise | Δ | ○ | Reference | ○ | × |
| *1: a represents a belt reinforcing layer structure of Fig. 2A type, and b represents a belt reinforcing layer structure of Fig. 2B type.<br>*2: the adhesion level in a residual adhesion evaluation method | | | | | |

[Table 5]

| | Example 8 | Example 9 | Example 10 | Example 11 | Example 12 |
|---|---|---|---|---|---|
| Belt reinforcing layer structure *1 | a | a | a | a | a |
| Adhesive agent type | (3)+(1)-2 | (3)+(1)-3 | (3)+(2)-2 | (3)+(2)-3 | (3)+(2)-4 |
| Belt reinforcing layer cord material | Pretreated PET*3 | Pretreated PET*3 | Pretreated PET*3 | Pretreated PET*3 | Pretreated PET*3 |
| Cord size | 1100dtex/2 | 1100dtex/2 | 1100dtcx/2 | 1100dtex/2 | 1100dtex/2 |
| Initial tensile resistance degree (GPa) | 10 | 10 | 10 | 10 | 10 |
| Residual adhesion level (N/cord)*2 | 18 | 16 | 20 | 16 | 16 |
| Cable twist coefficient α2 | 0.30 | 0.30 | 0.30 | 0.30 | 0.30 |
| Cable twists (times/10 cm) | 22 | 22 | 22 | 22 | 22 |
| Ply twist coefficient α1 | 0.22 | 0.22 | 0.22 | 0.22 | 0.22 |
| Ply twists (times/ 10 cm) | 22 | 22 | 22 | 22 | 22 |
| Ec (/5 cm) | 50 | 50 | 50 | 50 | 50 |
| Es (/5 cm) | 50 | 50 | 50 | 50 | 50 |
| Es/Ec | 1.0 | 1.0 | 1.0 | 1.0 | 1.0 |
| High-speed durability (index) | 140 | 133 | 140 | 135 | 133 |
| Run-flat durability (index) | 140 | 135 | 145 | 135 | 130 |

(continued)

| | Example 8 | Example 9 | Example 10 | Example 11 | Example 12 |
|---|---|---|---|---|---|
| Vehicle inside noise | ○ | ○ | ○ | ○ | ○ |
| *1: a represents a belt reinforcing layer structure of Fig. 2A type, and b represents a belt reinforcing layer structure of Fig. 2B type.<br>*2: the adhesion level in a residual adhesion evaluation method<br>*3: PET manufacture in the Example | | | | | |

[Table 6]

| | Comparative Example 4 | Comparative Example 5 | Comparative Example 6 | Comparative Example 7 |
|---|---|---|---|---|
| Belt reinforcing layer structure *1 | a | a | a | a |
| Adhesive agent type | (1)-1 | (1)-1 | (1)-1 | (1)-1 |
| Belt reinforcing layer cord material | multipurpose PET for tire cord | multipurpose PET for tire cord | multipurpose PET for tire cord | multipurpose PET for tire cord |
| Cord size | 1100dtex/2 | 1100dtex/2 | 1100dtex/2 | 1100dtex/2 |
| Initial tensile resistance degree (GPa) | 14 | 6 | 6 | 6 |
| Residual adhesion level (N/cord)*2 | 3 | 12 | 6 | 7 |
| Cable twist coefficient $\alpha 2$ | 0.11 | 0.48 | 0.48 | 0.07 |
| Cable twists (times/ 10 cm) | 8 | 34 | 34 | 5 |
| Ply twist coefficient $\alpha 1$ | 0.08 | 0.48 | 0.08 | 0.48 |
| Ply twists (times/10 cm) | 8 | 48 | 8 | 48 |
| Ec (/5 cm) | 25 | 25 | 25 | 25 |
| Es (/5 cm) | 60 | 60 | 60 | 60 |
| Es/Ec | 2.4 | 2.4 | 2.4 | 2.4 |
| High-speed durability (index) | 100 | 90 | 90 | 90 |
| High-speed durability (index) | 55 | 115 | 105 | 110 |
| Vehicle inside noise | ○ | × | × | × |
| *1: a represents a belt reinforcing layer structure of Fig. 2A type, and b represents a belt reinforcing layer structure of Fig. 2B type.<br>*2: the adhesion level in a residual adhesion evaluation method | | | | |

[Table 7]

| | Example 13 | Example 14 | Example 15 | Example 16 |
|---|---|---|---|---|
| Belt reinforcing layer structure *1 | a | a | a | a |
| Adhesive agent type | (1)-1 | (1)-1 | (1)-1 | (1)-1 |
| Belt reinforcing layer cord material | multipurpose PET for tire cord | multipurpose PET for tire cord | multipurpose PET for tire cord | multipurpose PET for tire cord |
| Cord size | 1100dtex/2 | 1100dtex/2 | 1100dtex/2 | 1100dtex/2 |
| Initial tensile resistance degree (GPa) | 13 | 7 | 8 | 8 |
| Residual adhesion level (N/cord)*2 | 5 | 12 | 10 | 11 |
| Cable twist coefficient $\alpha 2$ | 0.15 | 0.38 | 0.38 | 0.15 |
| Cable twists (times/ 10 cm) | 11 | 27 | 27 | 11 |
| Ply twist coefficient $\alpha 1$ | 0.11 | 0.38 | 0.11 | 0.38 |
| Ply twists (times/10 cm) | 11 | 38 | 11 | 38 |
| Ec (/5 cm) | 25 | 25 | 25 | 25 |
| Es (/5 cm) | 60 | 60 | 60 | 60 |
| Es/Ec | 2.4 | 2.4 | 2.4 | 2.4 |
| High-speed durability (index) | 115 | 100 | 105 | 110 |
| Run-flat durability (index) | 100 | 115 | 115 | 120 |
| Vehicle inside noise | ○ | Δ | Δ | Δ |
| *1: a represents a belt reinforcing layer structure of Fig. 2A type, and b represents a belt reinforcing layer structure of Fig. 2B type.<br>*2: the adhesion level in a residual adhesion evaluation method | | | | |

From Tables 3 to 7, it was found that, in the pneumatic radial tire of the present invention, run-flat durability was improved while inhibiting vibration during tire rolling and tire protrusion during high-speed traveling.

DESCRIPTION OF SYMBOLS

1 Bead portion
2 Side wall portion
3 Tread portion
4 Carcass
5 Side reinforcing rubber
6 Bead core
7 Bead filler
8 Steel belt layer

9 Belt reinforcing layer
10 Pneumatic radial tire
21 Unwinding apparatus
22 Cord
23 Adhesive agent liquid
24 Drying zone
25 Heat set zone
26 Normalizing zone
27 Winding apparatus
100 Rubber test piece
101 Organic fiber cord
102 Pulley

## Claims

1. A pneumatic radial tire (10) comprising a side reinforcing rubber layer (5) having a crescent shaped cross-section arranged on the inside of a carcass (4) at a side wall portion (2), and a belt reinforcing layer (9) which is formed by spirally winding a narrow width strip which is formed by covering at least one polyester cord with rubber with an angle of 0° to 5° with respect to the tire circumferential direction, **characterised in that**,
the polyester cord is pre-treated using an epoxy compound prior to an adhesive agent treatment and the adhesion level of the polyester cord in a residual adhesion evaluation method after an adhesive agent treatment is 5 N/cord or higher, wherein the residual adhesion evaluation method is as described in pages 2 and 3 of the description,
the polyester cord taken out from pneumatic radial tire (10) satisfies that the ply twist coefficient $\alpha 1$ and the cable twist coefficient $\alpha 2$ represented by the following formulae:

$$\alpha 1 = N1 \times (0.125 \times D1/\rho)^{0.5} \times 10^{-3} \quad (1)$$

$$\alpha 2 = N2 \times (0.125 \times D2/\rho)^{0.5} \times 10^{-3} \quad (2)$$

wherein N1 is the ply twists per 10 cm, D1 is the fineness in dtex per one ply twist thread, N2 is the cable twists per 10 cm, D2 is the total fineness in dtex of the cord, and $\rho$ is the density in g/cm$^3$ of the polyester cord, are 0.1 to 0.4 and 0.1 to 0.45, respectively,
wherein the ply twists of the polyester cord is 10 to 40 times/10 cm,
wherein the cable twists of the polyester cord is 10 to 40 times/10 cm, and
the initial tensile resistance degree is 7 to 20 GPa,
wherein the initial tensile resistance degree means the value calculated by the test method defined in JIS L 1017.

2. The pneumatic radial tire (10) according to claim 1, wherein the total fineness of the polyester cord is 2000 to 4000 dtex.

3. The pneumatic radial tire (10) according to claim 1, wherein on the outside of the tread portion of the carcass (4) in the tire radius direction and radially between the carcass (4) and the belt reinforcing layer (9), at least one steel belt layer (8) is arranged, wherein the end count Ec per 5 cm of the polyester cord per unit width at a middle region (9A) which is 70% of the steel belt layer (8) in the maximum width centering on the equator of the belt reinforcing layer (9) is smaller than the average end count Es per 5 cm of both end regions (9B) which are on the outside of the middle region of the belt reinforcing layer (9) in the tire width direction.

4. The pneumatic radial tire (10) according to claim 1, wherein on the outside of the tread portion of the carcass (4) in the tire radius direction and radially between the carcass (4) and the belt reinforcing layer (9), at least one steel belt layer (8) is arranged, wherein the end count Ec per 5 cm of the polyester cord per unit width at a middle region (9A) which is 70% of the steel belt layer in the maximum width centering on the equator of the belt reinforcing layer and the average end count Es per 5 cm of both end regions (9B) which are on the outside of the middle region of the steel belt reinforcing layer in the tire width direction satisfy the relationships represented by the following expressions:

$$Ec \geq 35$$

$$40 \leq Es \leq 150$$

$$2.0 \geq Es/Ec \geq 1.0.$$

**5.** The pneumatic radial tire (10) according to claim 1, wherein on the outside of the tread portion of the carcass (4) in the tire radius direction and radially between the carcass (4) and the belt reinforcing layer (9), at least one steel belt layer (8) is arranged, wherein the end count Ec per 5 cm of the polyester cord per unit width at a middle region (9A) which is 70% of the steel belt layer in the maximum width centering on the equator of the belt reinforcing layer and the average end count Es per 5 cm of both end regions (9B) which are on the outside of the middle region of the steel belt reinforcing layer in the tire width direction satisfy the relationships represented by the following expressions:

$$Ec < 35$$

$$40 \leq Es \leq 150$$

$$4.0 \geq Es/Ec \geq 1.4.$$

**6.** The pneumatic radial tire (10) according to claim 1, wherein the adhesive agent treatment is performed by using: an adhesive agent composition containing (A) a thermoplastic high molecular weight polymer composed of an ethylene addition polymer containing a 2-oxazoline group or a (blocked)isocyanate group, or, a urethane-based high molecular weight polymer containing a hydrazino group, (B) a water-soluble polymer composed of a copolymer containing a maleic anhydride unit and an isobutylene unit or derivatives thereof, (C) a reaction product of diphenylmethane diisocyanate and a thermally dissociating blocking agent for isocyanate groups, a condensate of resorcin and formaldehyde obtained by a novolac forming reaction, a condensate of chlorophenol, resorcin, and formaldehyde, a compound composed of an epoxycresol novolac resin, or, an aqueous urethane compound obtained by reacting organic polyisocyanates having a structure in which aromatics are bonded by methylene, a compound having a plurality of active hydrogen atoms, and a thermally dissociating blocking agent for isocyanate groups, and (D) an aliphatic epoxide compound.

**7.** The pneumatic radial tire (10) according to claim 1, wherein the adhesive agent treatment is performed by using an adhesive agent composition containing resorcin, formaldehyde, rubber latex, an emulsion-polymerized blocked isocyanate compound, and ammonia, wherein the content of the emulsion-polymerized blocked isocyanate compound is 15 to 45 % by mass.

## Patentansprüche

**1.** Radialluftreifen (10), beinhaltend eine Seitenverstärkungskautschukschicht (5), welche einen sichelförmigen Querschnitt besitzt, welche am Inneren einer Karkasse (4) an einem Seitenwandabschnitt (2) angeordnet ist, und eine Gürtelverstärkungsschicht (9), welche durch spiralförmiges Winden eines schmalen Bandes gebildet wird, welches durch Bedecken von mindestens einem Polyesterkord mit Kautschuk gebildet wird, in einem Winkel von 0° bis 5° in Bezug auf die Reifenumfangsrichtung, **dadurch gekennzeichnet, dass**:

der Polyesterkord vorbehandelt ist unter Verwendung einer Epoxidverbindung vor einer Haftmittelbehandlung und der Haftungslevel des Polyesterkords in einem Bewertungsverfahren der Resthaftung nach einer Haftmittelbehandlung 5 N/Kord oder darüber beträgt,
wobei das Resthaftungs-Bewertungsverfahren auf den Seiten 2 und 3 der Beschreibung beschrieben ist,
der aus dem Radialluftreifen (10) entnommene Polyesterkord die Anforderung erfüllt, dass der Lagendrehungsfaktor $\alpha 1$ und der Kabeldrehungsfaktor a2, welche durch die nachstehenden Formeln dargestellt werden:

$$\alpha 1 = N1 \times (0{,}125 \times D1/\rho)^{0{,}5} \times 10^{-3} \quad (1)$$

$$\alpha 2 = N2 \times (0{,}125 \times D2/\rho)^{0{,}5} \times 10^{-3} \quad (2)$$

wobei N1 die Anzahl der Lagendrehungen pro 10 cm, D1 die Feinheit in dtex für einen Lagendrehungsstrang, N2 die Anzahl der Kabeldrehungen pro 10 cm, D2 die Gesamtfeinheit in dtex des Kords und ρ die Dichte in $g/cm^3$ des Polyesterkords ist,
jeweils 0,1 bis 0.4 und 0,1 bis 0.45 betragen,
wobei die Lagendrehungen des Polyesterkords 10 bis 40 Drehungen/10 cm betragen,
wobei die Kabeldrehungen des Polyesterkords 10 bis 40 Drehungen/10 cm betragen, und
der anfängliche Zugfestigkeitsgrad 7 bis 20 GPa beträgt,
wobei der anfängliche Zugfestigkeitsgrad denjenigen Wert bezeichnet, der durch das Prüfverfahren berechnet wird, welches in der Norm JIS L 1017 definiert ist.

**2.** Radialluftreifen (10) nach Anspruch 1, bei welchem die Gesamtfeinheit des Polyesterkords 2000 bis 4000 dtex beträgt.

**3.** Radialluftreifen (10) nach Anspruch 1, bei welchem an der Außenseite des Laufflächenabschnitts der Karkasse (4) in der Reifenradiusrichtung und radial zwischen der Karkasse (4) und der Gürtelverstärkungsschicht (9) mindestens eine Stahlgürtelschicht (8) angeordnet ist, wobei
die Endenzahl Ec des Polyesterkords pro 5 cm Breiteneinheit in einem Mittenbereich (9A), welcher 70 % der Stahlgürtelschicht (8) in der maximalen Breite, zentriert am Äquator der Gürtelverstärkungsschicht (9), beträgt, kleiner als die mittlere Endenzahl Es pro 5 cm beider Endbereiche (9B) ist, welche an der Außenseite des Mittenbereichs der Gürtelverstärkungsschicht (9) in der Reifenbreitenrichtung liegen.

**4.** Radialluftreifen (10) nach Anspruch 1, bei welchem an der Außenseite des Laufflächenabschnitts der Karkasse (4) in der Reifenradiusrichtung und radial zwischen der Karkasse (4) und der Gürtelverstärkungsschicht (9), mindestens eine Stahlgürtelschicht (8) angeordnet ist, wobei die Endenzahl Ec des Polyesterkords pro 5 cm Breiteneinheit in einem Mittenbereich (9A), welcher 70 % der Stahlgürtelschicht in der maximalen Breite, zentriert am Äquator der Gürtelverstärkungsschicht beträgt, und die mittlere Endenzahl Es pro 5 cm beider Endbereiche (9B), welche an der Außenseite des Mittenbereichs der Stahlgürtelverstärkungsschicht in der Reifenbreitenrichtung liegen, die Verhältnisse erfüllen, welche durch die folgenden Ausdrücke dargestellt werden:

$$Ec \geq 35$$

$$40 \leq Es \leq 150$$

$$2{,}0 \geq Es/Ec \geq 1{,}0.$$

**5.** Radialluftreifen (10) nach Anspruch 1, bei welchem an der Außenseite des Laufflächenabschnitts der Karkasse (4) in der Reifenradiusrichtung und radial zwischen der Karkasse (4) und der Gürtelverstärkungsschicht (9), mindestens eine Stahlgürtelschicht (8) angeordnet ist, wobei die Endenzahl Ec des Polyesterkords pro 5 cm Breiteneinheit in einem Mittenbereich (9A), welcher 70 % der Stahlgürtelschicht in der maximalen Breite, zentriert am Äquator der Gürtelverstärkungsschicht beträgt, und die mittlere Endenzahl Es pro 5 cm beider Endbereiche (9B), welche an der Außenseite des Mittenbereichs der Stahlgürtelverstärkungsschicht in der Reifenbreitenrichtung liegen, die Verhältnisse erfüllen, welche durch die folgenden Ausdrücke dargestellt werden:

$$Ec < 35$$

$$40 \leq Es \leq 150$$

$$4,0 \geq Es/Ec \geq 1,4.$$

6. Radialluftreifen (10) nach Anspruch 1, bei welchem die Haftmittelbehandlung unter Verwendung folgender Elemente erfolgt: einer Haftmittelzusammensetzung, welche (A) ein thermoplastisches Polymer mit hohem Molekulargewicht enthält, welches aus einem Ethylen-Additionspolymer besteht, welches eine 2-Oxazolingruppe oder eine (geblockte) Isocyanatgruppe enthält, oder ein urethanbasiertes Polymer mit hohem Molekulargewicht, welches eine Hydrazinogruppe enthält, (B) ein wasserlösliches Polymer, bestehend aus einem Copolymer, welches eine Maleinsäureanhydrid-Einheit und eine Isobutylen-Einheit oder Derivate davon enthält, (C) ein Reaktionsprodukt aus Diphenylmethandiisocyanat und einem thermisch dissoziierenden Blockiermittel für Isocyanatgruppen, ein Kondensat aus Resorcin und Formaldehyd, welches durch eine novolakbildende Reaktion erzielt wird, ein Kondensat aus Chlorphenol, Resorcin und Formaldehyd, eine Verbindung, bestehend aus einem Epoxycresol-Novolakharz, oder eine wässrige Urethanverbindung, welche durch Reagieren von organischen Polyisocyanaten, welche eine Struktur besitzen, in welcher Aromaten durch Methylen gebunden sind, erzielt wird, eine Verbindung, welche eine Vielzahl von aktiven Wasserstoffatomen besitzt, und ein thermisch dissoziierendes Blockiermittel für Isocyanatgruppen, und (D) eine aliphatische Epoxidverbindung.

7. Radialluftreifen (10) nach Anspruch 1, bei welchem die Haftmittelbehandlung unter Verwendung einer Haftmittelzusammensetzung erfolgt, welche Resorcin, Formaldehyd, Kautschuklatex, eine emulsionspolymerisierte, geblockte Isocyanatverbindung und Ammoniak enthält, wobei der Gehalt der emulsionspolymerisierten, geblockten Isocyanatverbindung 15 bis 45 Gewichtsprozent beträgt.

## Revendications

1. Pneu radial (10) comprenant une couche de caoutchouc de renfort latérale (5) présentant une section transversale en forme de croissant agencée sur l'intérieur d'une carcasse (4) au niveau d'une partie de paroi latérale (2) et une couche de renfort de ceinture (9) qui est formée en roulant en spirale une bande de largeur étroite formée en recouvrant au moins un cordon de polyester avec du caoutchouc selon un angle compris entre 0° et 5° par rapport à la direction circonférentielle du pneu, **caractérisé en ce que**,
le cordon de polyester est prétraité en utilisant un composé époxy avant un traitement par un agent adhésif et le niveau d'adhésion du cordon de polyester dans un procédé d'évaluation d'adhésion résiduelle après un traitement par agent adhésif est de 5 N/cordon ou plus,
dans lequel le procédé d'évaluation d'adhésion résiduelle est comme décrit aux pages 2 et 3 de la description, le cordon de polyester prélevé à partir d'un pneu radial (10) satisfait le fait que le coefficient de torsion de nappe al et le coefficient de torsion de câble $\alpha2$ représenté par les formules suivantes :

$$\alpha1 = N1 \text{ x } (0,125 \text{ x } D1/\rho)^{0,5} \text{ x } 10^{-3} \quad (1)$$

$$\alpha2 = N2 \text{ x } (0,125 \text{ x } D2/\rho)^{0,5} \text{ x } 10^{-3} \quad (2)$$

dans lequel N1 représente les torsions de nappe pour 10 cm, D1 est la finesse en dtx pour un filet de torsion de nappe, N2 représente les torsions de câble pour 10 cm, D2 est la finesse totale en dtex du cordon, et $\rho$ est la densité en g/cm3 du cordon de polyester, sont comprises entre 0,1 et 0,4, et entre 0,1 et 0,45 respectivement,
dans lequel les torsions de nappe du cordon de polyester sont comprises entre 10 et 40 fois/10 cm,
dans lequel les torsions de câble du cordon de polyester sont comprises entre 10 et 40 fois/10 cm, et
le degré de résistance à la traction initiale est compris entre 7 et 20 GPa,
dans lequel le degré de résistance à la traction initiale signifie la valeur calculée par le procédé de test défini dans JIS L 1017.

2. Pneu radial (10) selon la revendication 1, dans lequel la finesse totale du cordon de polyester est comprise entre 2000 et 4000 dtex.

3. Pneu radial (10) selon la revendication 1, dans lequel, à l'extérieur de la portion de bande de roulement de la carcasse (4) dans le sens du rayon du pneu et de manière radiale entre la carcasse (4) et la couche de renfort de

ceinture (9), au moins une couche de ceinture en acier (8) est agencée, dans lequel le décompte final Ec pour 5 cm du cordon de polyester par largeur unitaire dans une région centrale (9A) qui est constituée de 70 % de couche de ceinture en acier (8) dans la largeur maximale centrée sur l'équateur de la couche de renfort de ceinture (9) est inférieur au décompte final moyen Es pour 5 cm des deux régions d'extrémité (9B) qui sont sur l'extérieur de la région centrale de la couche de renfort de ceinture (9) dans le sens de la largeur du pneu.

4. Pneu radial (10) selon la revendication 1, dans lequel sur l'extérieur de la partie de bande de roulement de la carcasse (4) dans le sens du rayon du pneu et de manière radiale entre la carcasse (4) et la couche de renfort de ceinture (9), au moins une couche de ceinture en acier (8) est agencée, dans lequel le décompte final Ec pour 5 cm du cordon de polyester par largeur unitaire dans une région centrale (9A) qui est constituée à 70 % de la couche de ceinture en acier dans largeur maximale centrée sur l'équateur de la couche de renfort de ceinture et le décompte final moyen Es pour 5 cm des deux régions d'extrémité (9B) qui sont sur l'extérieur de la région centrale de la couche de renfort de ceinture en acier dans le sens de la largeur du pneu satisfont les relations représentées par les expressions suivantes :

$$Ec \geq 35$$

$$40 \leq Es \leq 150$$

$$2{,}0 \geq Es/Ec \geq 1{,}0.$$

5. Pneu radial (10) selon la revendication 1, dans lequel sur l'extérieur de la partie de bande de roulement de la carcasse (4) dans le sens du rayon de pneu et de manière radiale entre la carcasse (4) et la couche de renfort de ceinture (9), au moins une couche de ceinture en acier (8) est agencée, dans lequel le décompte final Ec pour 5 cm du cordon de polyester par largeur unitaire dans une région centrale (9A) qui est de 70 % de la couche de ceinture en acier dans largeur maximale centrée sur l'équateur de la couche de renfort de ceinture et le décompte final moyen Es pour 5 cm des deux régions d'extrémité (9B) qui sont sur l'extérieur de la région centrale de la couche de renfort de ceinture d'acier dans le sens de la largeur du pneu satisfont les relations représentées par les expressions suivantes

$$Ec < 35$$

$$40 \leq Es \leq 150$$

$$4{,}0 \geq Es/Ec \geq 1{,}4.$$

6. Pneu radial (10) selon la revendication 1 dans lequel le traitement par agent adhésif est réalisé en utilisant : une composition d'agent adhésif contenant (A) un polymère thermoplastique à masse moléculaire élevée composé d'un polymère d'addition d'éthylène contenant un groupe 2-oxazoline ou un groupe isocyanate (bloqué), ou un polymère à masse moléculaire élevée à base d'uréthane contenant un groupe hydrazino, (B) un polymère soluble dans l'eau composé d'un copolymère contenant une unité d'anhydride maléique et une unité d'isobutylène ou des dérivés de ceux-ci ; (C) un produit de réaction de diisocyanate de diphénylméthane et un agent bloquant à dissociation thermique pour les groupes isocyanate, un condensé de résorcine et de formaldéhyde obtenu par une réaction de formation de novolac, un condensé de chlorophénol, de résorcine et de formaldéhyde, un composé constitué d'une résine de novolac d'époxycrésol, ou un composé d'uréthane aqueux obtenu en faisant réagir des polyisocyanates organiques présentant une structure dans laquelle des composés aromatiques sont liés par du méthylène, un composé présentant une pluralité d'atomes d'hydrogènes actifs, et un agent bloquant à dissociation thermique pour des groupes isocyanate, et (D) un composé époxy aliphatique.

7. Pneu radial (10) selon la revendication 1, dans lequel le traitement par agent adhésif est réalisé en utilisant une composition d'agent adhésif contenant de la résorcine, du formaldéhyde, du latex d'élastomère-caoutchouc, un

composé d'isocyanate bloqué polymérisé par émulsion, et de l'ammoniaque, dans lequel la teneur en composé isocyanate bloqué polymérisé par émulsion est comprise entre 15 et 45 % en masse.

[Fig. 1]

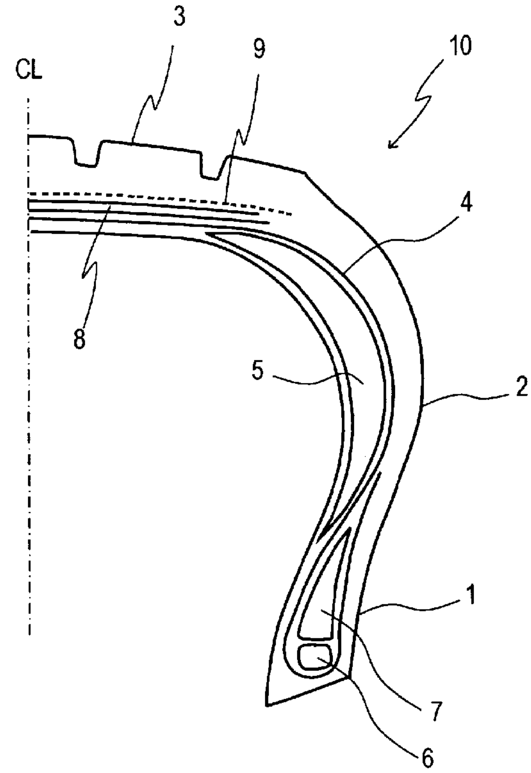


[Fig. 2]

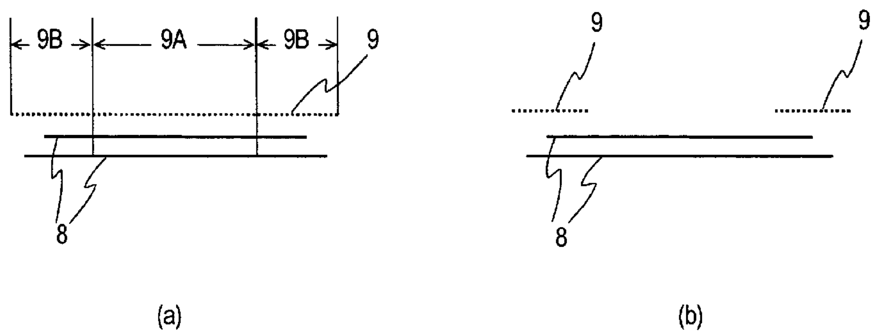


[Fig. 3]

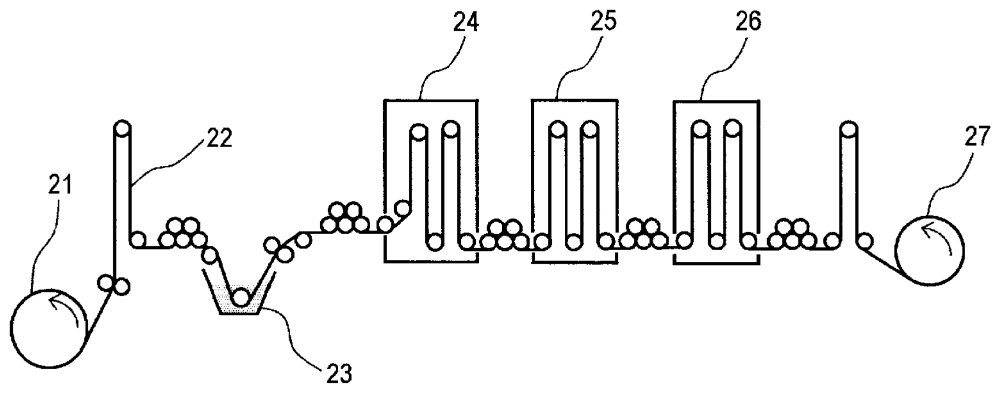

[Fig. 4]

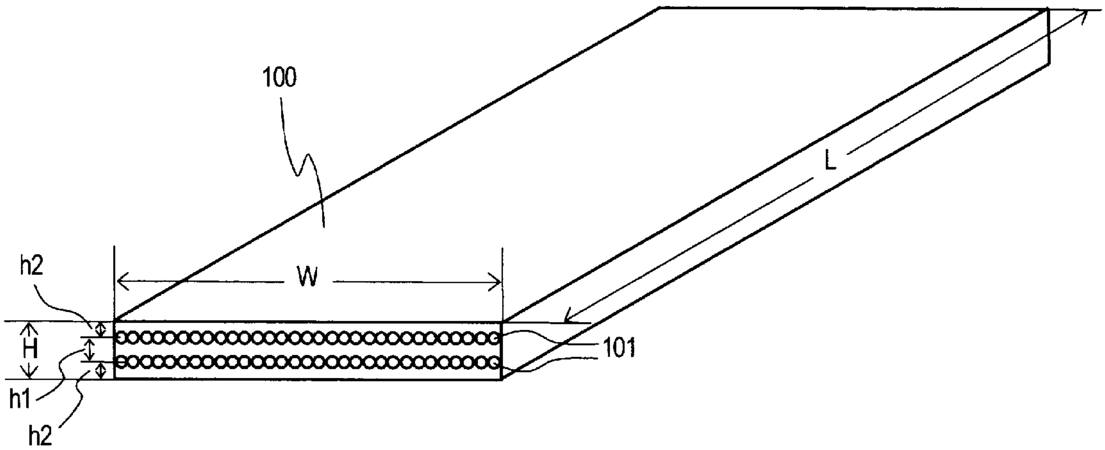


[Fig. 5]

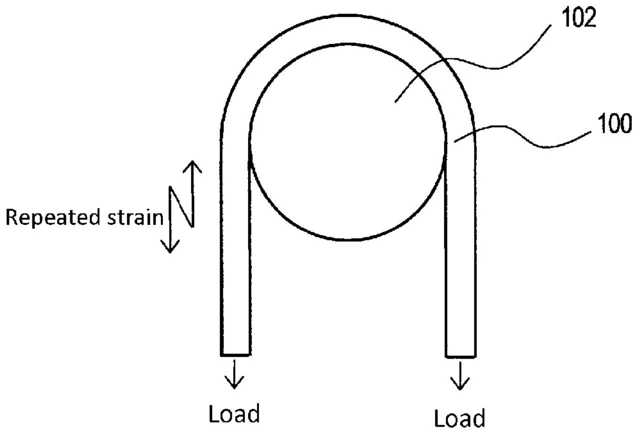

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007145123 A
- JP 2002079806 A
- EP 1491365 A
- WO 9713818 A
- JP H10203356 B
- JP S6351474 B
- JP H10139839 B